# EUROPÄISCHE PATENTSCHRIFT

(11) **EP 3 393 871 B1**
(45) Veröffentlichungstag und Bekanntmachung des Hinweises auf die Patenterteilung: **24.02.2021**
(21) Anmeldenummer: 16793757.2
(22) Anmeldetag: 09.11.2016
(51) Int. Cl.: B60T 8/1766, B60T 13/66, B60T 13/68

(54) **VERFAHREN ZUM REGELN EINER FAHRZEUG-IST-VERZÖGERUNG IN EINEM FAHRZEUG MIT EINEM ABS-BREMSSYSTEM**
METHOD FOR REGULATING A VEHICLE-ACTUAL-DECELERATION IN A VEHICLE WITH AN ABS BRAKE SYSTEM
PROCÉDÉ DE RÉGULATION D'UNE DÉCÉLÉRATION RÉELLE D'UN VÉHICULE COMPRENANT UN SYSTÈME DE FREINAGE ABS

(30) Priorität: 22.12.2015 DE 102015016721
(43) Veröffentlichungstag der Anmeldung: 31.10.2018
(73) Patentinhaber: WABCO GmbH, 30453 Hannover (DE)
(72) Erfinder: ECKERT, Horst, 31547 Rehburg-Loccum (DE); SCHWAGMEYER, Florian, 31700 Heuerßen (DE)
(74) Vertreter: Rabe, Dirk-Heinrich
(86) Internationale Anmeldenummer: PCT/EP2016/001852
(87) Internationale Veröffentlichungsnummer: WO 2017/108148

(56) Entgegenhaltungen:
- DE-A1- 10 053 606
- DE-A1- 19 615 305
- US-A- 5 732 378

## Beschreibung

Die Erfindung betrifft ein Verfahren zum Regeln einer Fahrzeug-Ist-Verzögerung in einem Fahrzeug, insbesondere Nutzfahrzeug, mit einem ABS-Bremssystem sowie eine Steuereinrichtung zum Durchführen des Verfahrens.

Drucksteuerventile werden beispielsweise als ABS-Steuerventile in einem ABS-Bremssystem verwendet, um eine Druckdifferenz an Radbremsen eines Fahrzeuges, insbesondere Nutzfahrzeuges, einstellen zu können, sobald ein Bremsschlupffall erkannt wurde. Ein Drucksteuerventil bzw. ABS-Steuerventil weist hierbei ein Einlassventil und ein Auslassventil auf, die jeweils als 2/2-Wege-Magnetventile ausgeführt sind. Je nach Ansteuerung, die getaktet bzw. gepulst stattfindet, befindet sich das Einlassventil bzw. das Auslassventil entweder in einem geöffneten oder in einem geschlossenen Zustand, so dass bei entsprechender Ansteuerung ein Bremsdruck an den jeweiligen Radbremsen erhöht, gehalten oder verringert werden kann, wobei dazu ein bestimmter Vorratsdruck aus Vorratsbehältern am Eingang des ABS-Steuerventils bereitgestellt wird.

Ein derartiges ABS-Steuerventil kann aber auch zum Regeln einer Fahrzeug-Ist-Verzögerung durch das ABS-Bremssystem zum Einsatz kommen, wenn ein angeforderter Bremsdruck bzw. eine Bremsdruckdifferenz von einem beliebigen Fahrerassistenzsystem bzw. einem Stabilitäts-Kontrollsystem, beispielsweise ein Stabilitätsprogramm (ESP), eine Abstandsregelung (ACC), eine Umkipp-Verhinderung (RSC), ein Notbremssystem (AEBS), eine Antischlupfregelung (ASR) oder eine Gierratensteuerung (YC), vorgegeben wird.

Ergänzend oder alternativ kann bei einer Fahrerbremsung der Bremsdruck bzw. eine Bremsdruckdifferenz an einzelnen Radbremsen von einer Bremsdruckverteilung (EBD) oder einer Bremskraftlimitierung (EBL) vorgegeben und durch das ABS-Steuerventil ausgesteuert werden.

Weiterhin kann bei einer derartigen Regelung der Fahrzeug-Ist-Verzögerung ein Unterschied im Raddrehverhalten zwischen zwei Fahrzeugachsen berücksichtigt werden, wobei daraus abgeleitet werden kann, wie stark eine Fahrzeugachse in Relation zu einer weiteren Fahrzeugachse überbremst oder unterbremst ist. Das Raddrehverhalten wird dabei durch einen Bremsschlupf oder eine Drehgeschwindigkeit bzw. eine Winkelgeschwindigkeit der Räder der einzelnen Fahrzeugachsen charakterisiert. Durch ein Ansteuern der entsprechenden ABS-Steuerventile kann dieses Überbremsen oder Unterbremsen vermieden werden.

Die Ansteuerung des Drucksteuerventils bzw. des ABS-Steuerventils erfolgt hierbei über eine Steuereinrichtung, die über bestimmte Ansteuerzeiten das Einlassventil und/oder das Auslassventil des jeweiligen Drucksteuerventils ansteuert, d. h. öffnet oder schließt. Die Ansteuerzeiten bestimmen hierbei die Druckdifferenz, die an den jeweiligen Radbremsen über das Drucksteuerventil eingestellt wird. Je nachdem, ob das Auslassventil und/oder das Einlassventil angesteuert werden, wird somit der Bremsdruck an den Radbremsen um die Druckdifferenz verringert oder erhöht oder der Bremsdruck gehalten, so dass darüber eine Fahrzeug-Ist-Verzögerung, ein Unterschied im Raddrehverhalten der Räder und/oder ein Bremsschlupf entsprechend eingestellt werden können. Der Zusammenhang zwischen der Ansteuerzeit und der vorgegebenen Druckdifferenz basiert hierbei sowohl für das Einlassventil als auch für das Auslassventil jeweils auf einer vorher empirisch bestimmten Druckdifferenz-Kennlinie.

Liegt eine Bremsanforderung von einem Fahrerassistenzsystem vor, so werden von der Steuereinrichtung die Drucksteuerventile an den Rädern der entsprechenden Fahrzeugachsen des Fahrzeuges angesteuert. Bei einer derartigen Ansteuerung wird ergänzend berücksichtigt, dass eine dem jeweiligen Drucksteuerventil zugeordnete Mindest-Ansteuerzeit eingehalten wird, mit der das Drucksteuerventil mindestens anzusteuern ist, wobei sich die Mindest-Ansteuerzeit insbesondere aus sicherheitsrelevanten Überlegungen ergibt, wonach jedes Drucksteuerventil Totzeiten bzw. Reaktionszeiten und Toleranzzeiten aufweist, die unter anderem von der Temperatur des Drucksteuerventils abhängig sind und in denen keine effektive Druckaussteuerung erfolgt.

Nachteilig hierbei ist, dass bei einer angeforderten Bremsung mit einer Fahrzeug-Soll-Verzögerung zunächst eine gleichzeitige Ansteuerung aller Drucksteuerventile zumindest über die Mindest-Ansteuerzeit stattfindet, auch wenn in bestimmten Situationen, beispielsweise bei einer geringen Bremsanforderung, eine der Mindest-Ansteuerzeit entsprechende Druckdifferenz an den entsprechenden Drucksteuerventilen tatsächlich nicht benötigt wird, um die Fahrzeug-Soll-Verzögerung einzustellen. Dies führt dazu, dass in einer nachfolgenden Regelschleife der Bremsdruck an den einzelnen Drucksteuerventilen wieder anzupassen ist, was vom Fahrer als negativ wahrgenommen wird. Das tatsächliche Bremsziel, die Fahrzeug-Soll-Verzögerung, wird somit erst nach einer unnötigen Nachregelung tatsächlich erreicht. Die Regelung erfolgt dadurch zumindest bei geringen Bremsanforderungen bzw. bei geringen zeitabhängigen Änderungen von Bremsanforderungen, z. B. bei einer Bremsung mit einem Verlauf der Fahrzeug-Soll-Verzögerung an einer Rampe, sehr grobstufig und ungenau, d. h. es kommt beispielsweise bei einer Bremsung mit einem rampenförmigen Verlauf der Fahrzeug-Soll-Verzögerung zu permanent auftretenden zu großen Regelabweichungen. Zum anderen kann es durch das unnötige und abrupte Abbremsen bzw. durch das grobstufige Regeln der Fahrzeug-Ist-Verzögerung von Taktzyklus zu Taktzyklus zu einem Stabilitätsverlust, d. h. insbesondere einem ABS-Bremsschlupffall kommen. Somit können sich insbesondere auch sicherheitskritische Situationen während einer Bremsung ergeben; der Fahrkomfort sowie die Sicherheit bei einer Bremsung des Fahrzeuges sinken.

In DE 10 2008 057 529 A1 ist ein Verfahren zum Betreiben eines Bremssystems mit einer regenerativen Radbremse beschrieben, bei dem vorgesehen ist, als Reibungsbremsen ausgeführte Radbremsen des Fahrzeuges derartig anzusteuern, dass ein den Unterschied im Raddrehverhalten charakterisierender Differenzschlupf zwischen den Vorderrädern der Vorderachse und den Hinterrädern der Hinterachse in einem vorgegebenen Soll-Intervall für den Differenzschlupf bleibt. Dazu werden lediglich Radbremsen an der Hinterachse angesteuert, wobei zunächst eine regenerative Radbremse mit einer maximal möglichen Bremsleistung angesteuert wird. Reicht dies nicht aus, um den Differenzschlupf auf nahezu null zu senken, wird zusätzlich eine Bremsung durch eine weitere Hinterachs-Radbremse bewirkt. Die Hinterachs-Radbremse wird hierbei gleichzeitig mit der regenerativen Radbremse angesteuert, wobei eine Ansteuerung der Hinterachs-Radbremse lediglich mit einem Ansprechdruck erfolgt, der noch keine Bremsung bewirkt, so dass ein Erhöhen über den Ansprechdruck hinaus unmittelbar zu einem Bremsen der Hinterachs-Radbremse ohne Totzeiten führt. Dadurch soll eine Ansprechzeit der Hinterachs-Radbremse verringert werden. Befindet sich der Differenzschlupf im Soll-Intervall kann auch die Vorderachs-Radbremse betätigt werden.

In DE 102 32 792 A1 ist ein Bremsverfahren für ein Fahrzeug beschrieben, bei dem bei einer Fahrerassistenzbremsung über ein ACC oder ein RSC lediglich die angetriebenen Fahrzeugachsen abgebremst werden, indem ein erhöhter Vorratsdruck an den ABS-Bremsventilen bereitgestellt wird, der über ein kurzes Öffnen und wieder Schließen der ABS-Bremsventile in entsprechender Höhe an die Radbremsen weitergeleitet wird.

In EP 1 104 731 A2 ist beschrieben, ein Fahrzeug mit einem ABS-Bremssystem derartig abzubremsen, dass eine tatsächliche Fahrzeug-Ist-Verzögerung an eine vorgegebene Fahrzeug-Soll-Verzögerung angepasst wird, wobei bei Feststellen einer Abweichung automatisch die Bremskraft an einer Hinterachse derartig erhöht wird, dass ein Differenzschlupf zwischen Vorderachse und Hinterachse nahezu null ist, d. h. der Bremsschlupf an der Hinterachse dem Bremsschlupf der Vorderachse entspricht

DE 19615305 A1 offenbart ein Verfahren und eine Vorrichtung zur Steuerung der Bremskraft an wenigstens einem Rad eines Fahrzeuges. Insbesondere die Vorrichtung umfasst erste Mittel, mit denen eine Bremskraft an wenigstens einem Rad eines Fahrzeuges wenigstens aufgebaut werden kann, zweite Mittel, mit denen eine Ansteuerzeit für die ersten Mittel zur Erreichung wenigstens eines definierten Zustandes der ersten Mittel ermittelt wird, dritte Mittel, mit denen die ermittelte Ansteuerzeit mit einer zugehörigen, vorgegebenen Zeit, die den definierten Zustand der ersten Mittel beschreibt, verglichen wird, und mit denen daraus ein Korrekturfaktor ermittelt wird und vierte Mittel, mit denen in Abhängigkeit des Korrekturfaktors die Ansteuerzeiten für die ersten Mittel zum Aufbau einer wählbaren Bremskraft an einem Rad korrigiert werden.

US 5732378 betrifft ein Verfahren zur Steuerung der Bremskraft eines Fahrzeuges. Insbesondere offenbart das genannte Dokument ein Verfahren zur Messung des Drucks an jeweiligen Räder des Fahrzeuges.

DE 10053606 A1 offenbart insbesondere eine Magnetventilregelung mit einer schaltenden Endstufe zum Ansteuern eines Magnetventils. Das genannte Magnetventil umfasst Mittel zum Vorgeben einer Ventilöffnungszeit und Mittel zum Vorgeben eines Druckes über dem Ventil.

Der Erfindung liegt die Aufgabe zugrunde, ein Verfahren zum Regeln einer Fahrzeug-Ist-Verzögerung in einem Fahrzeug, insbesondere Nutzfahrzeug, bereitzustellen, mit dem eine zuverlässige und sichere Bremsung des Fahrzeuges erreicht werden kann.

Diese Aufgabe wird durch ein Verfahren nach Anspruch 1 sowie eine Steuereinheit nach Anspruch 18 gelöst. Bevorzugte Weiterbildungen sind in den Unteransprüchen angegeben.

Erfindungsgemäß wird dies demnach erreicht, indem bei einem Unterschreiten einer berechneten Ansteuerzeit für ein Drucksteuerventil unter eine diesem Drucksteuerventil zugeordneten Mindest-Ansteuerzeit eine Neuberechnung der Ansteuerzeiten stattfindet, wobei für diese Neuberechnung der Ansteuerzeiten eine geringere Anzahl an Drucksteuerventilen zugrunde gelegt wird als bei der ursprünglichen Berechnung der Ansteuerzeiten. Demnach werden bei Vorliegen einer Bremsanforderung bzw. bei Vorgabe einer Fahrzeug-Soll-Verzögerung, die auch aus einer Änderung der Bremsanforderung zwischen zwei Taktzyklen bzw. Ansteuerzyklen folgen kann, beispielsweise bei einer im Wesentlichen rampenförmig angeforderten Bremsung, bei der zwischen zwei aufeinanderfolgenden Taktzyklen unterschiedliche Fahrzeug-Soll-Verzögerungen vorliegen, die der Rampe folgen, in einem ersten Berechnungsschritt Ansteuerzeiten für eine erste Anzahl an Drucksteuerventilen des Fahrzeuges, die beispielsweise die Anzahl aller für eine Regelung im Fahrzeug zur Verfügung stehenden Drucksteuerventile ist, berechnet, um die vorgegebene Fahrzeug-Soll-Verzögerung mit dieser ersten Anzahl an Drucksteuerventilen einzustellen. Wird dann festgestellt, dass mindestens eine der berechneten Ansteuerzeiten für ein Drucksteuerventil eine diesem Drucksteuerventil zugeordnete Mindest-Ansteuerzeit unterschreitet, findet in einem zweiten Berechnungsschritt eine Neuberechnung der Ansteuerzeiten statt, wobei dazu neuberechnete Korrektur-Ansteuerzeiten für eine zweite Anzahl an Drucksteuerventilen, die eine echte Teilmenge der ersten Anzahl an Drucksteuerventilen ist, ermittelt werden. D. h. die zweite Anzahl an Drucksteuerventile ist demnach kleiner als die erste Anzahl.

Die Korrektur-Ansteuerzeiten geben somit an, wie lange die jeweiligen Drucksteuerventile anzusteuern sind, damit die Fahrzeug-Soll-Verzögerung durch diese reduzierte Anzahl an Drucksteuerventilen durchgesetzt wird, wobei erfindungsgemäß gleichzeitig ein Ist-Raddrehverhalten zwischen Rädern zweier Achsen auf ein wunschgemäßes bzw. vorgegebenes Soll-Raddrehverhalten eingestellt wird. D. h. durch die Korrektur-Ansteuerzeiten wird erfindungsgemäß der Verlust an Bremswirkung durch die wegfallenden Drucksteuerventile, d. h. die erste Anzahl minus der zweiten Anzahl, kompensiert.

Dadurch kann vorteilhafterweise bereits erreicht werden, dass die Ansteuerzeiten der anzusteuernden Drucksteuerventile an die Mindest-Ansteuerzeit der jeweiligen Drucksteuerventile angenähert werden können bzw. diese dadurch auch überschreiten. Denn werden insgesamt weniger Drucksteuerventile angesteuert, um dieselbe Fahrzeug-Soll-Verzögerung zu erreichen, steigen automatisch die (korrigierten) Ansteuerzeiten, da die fehlende Bremswirkung dadurch kompensiert wird. Demnach kann eine Bremsung genauer stattfinden, da die vorgegebene Fahrzeug-Soll-Verzögerung zu Beginn einer Bremsung oder während einer Bremsung mit einem in Abhängigkeit der Zeit rampenförmigen Verlauf der Fahrzeug-Soll-Verzögerung durch einen Vorgang einer Ansteuerung eines oder mehrerer Drucksteuerventile weniger stark bzw. nicht mehr überschritten wird und somit in der Folge davon weniger stark nachgeregelt werden muss, um die tatsächlich angeforderte Fahrzeug-Soll-Verzögerung einzustellen. Bei einem zeitabhängig rampenförmigen Verlauf der Fahrzeug-Soll-Verzögerung kann somit eine feinstufigere Regelung erreicht werden, da es möglich ist, trotz Einhaltung der geforderten Mindest-Ansteuerzeit eines Drucksteuerventils eine Anpassung der Fahrzeug-Ist-Verzögerung an die geforderte Fahrzeug-Soll-Verzögerung, bei gleichzeitiger Einstellung eines wunschgemäßen Raddrehverhaltens, durchzuführen, die eine kleinere Regelabweichung hervorruft. Dadurch steigen auch die Sicherheit beim Bremsvorgang und der Bremskomfort, da die Wahrscheinlichkeit für einen ABS-Bremsschlupffall aufgrund eines zu abrupten bzw. grobstufigen Abbremsens bzw. Abbremsvorgangs an einzelnen Rädern sinkt.

Die Drucksteuerventile sind hierbei beispielsweise ABS-Steuerventile eines ABS-Bremssystems, wobei das ABS-Druckregelsystem dem erfindungsgemäßen Verfahren überlagert ist und das bei Erkennen eines Bremsschlupffalles an zumindest einem Rad die Drucksteuerventile bzw. die ABS-Steuerventile derartig ansteuert, dass einem Blockieren der Räder entgegengewirkt wird. Unabhängig von der Situation an den Drucksteuerventilen im Hinblick auf die Mindest-Ansteuerzeit findet somit im ABS-Bremsschlupffall immer eine Ansteuerung des jeweils betroffenen Drucksteuerventils statt, um ein Blockieren des jeweiligen Rades zu verhindern. Die Berechnungen finden vorzugsweise in einer Steuereinrichtung des ABS-Bremssystems statt, auf der beispielsweise eine Software vorgesehen ist, die ausgebildet ist, die entsprechenden Berechnungsschritte durchzuführen. Die Steuereinrichtung kann aber auch extern angeordnet sein und auf die entsprechenden Informationen vom ABS-Bremssystem zugreifen, um die Berechnungsschritte durchführen zu können.

Die Berechnungen der Ansteuerzeiten bzw. der Korrektur-Ansteuerzeiten im ersten als auch im zweiten Berechnungsschritt erfolgen hierbei jeweils derartig, dass eine tatsächlich vorliegende Fahrzeug-Ist-Verzögerung, d. h. eine Fahrzeug-Beschleunigung, an die vorgegebene Fahrzeug-Soll-Verzögerung angepasst wird. Die Vorgabe der Fahrzeug-Soll-Verzögerung erfolgt bei einer ausschließlichen Bremsung aufgrund einer externen Bremsanforderung eines Fahrerassistenzsystems bzw. eines Stabilitäts-Kontrollsystems allein vom Fahrerassistenzsystem bzw. Stabilitäts-Kontrollsystem. Bei Vorliegen einer kombinierten Bremsung aus externer Bremsanforderung und Fahrerbremsung hingegen auf Basis beider Vorgaben, wobei die resultierende Vorgabe aus beiden Vorgaben in einem Additionsverfahren oder Maximumverfahren ermittelt wird.

Als Fahrerassistenzsysteme bzw. Stabilitäts-Kontrollsysteme kommen beispielsweise ein Stabilitätsprogramm (ESP), eine Abstandsregelung (ACC), eine Umkipp-Verhinderung (RSC), ein Notbremssystem (AEBS) oder eine Gierratensteuerung (YC) in Betracht. Ergänzend oder alternativ kann bei einer Fahrerbremsung der Bremsdruck bzw. eine Bremsdruckdifferenz an einzelnen Radbremsen von einer Bremsdruckverteilung (EBD) oder einer Bremskraftlimitierung (EBL) vorgegeben und durch das Drucksteuerventil ausgesteuert werden.

Gleichzeitig erfolgt eine Berechnung der Ansteuerzeiten in Abhängigkeit mindestens eines Ist-Raddrehverhaltens, wobei das Ist-Raddrehverhalten durch einen gerade vorliegenden Unterschied in einem Bremsschlupf oder einer Drehgeschwindigkeit bzw. Winkelgeschwindigkeit von Rädern einer ersten Fahrzeugachse, beispielsweise einer Vorderachse, zu Rädern einer weiteren Fahrzeugachse, beispielsweise einer Hinterachse, charakterisiert ist. Das Ist-Raddrehverhalten gibt also an, wie stark die erste Fahrzeugachse oder einzelne Räder der ersten Fahrzeugachse in Relation zu der weiteren Fahrzeugachse oder einzelnen Rädern der weiteren Fahrzeugachse überbremst oder unterbremst sind. Als Überbremsen wird hierbei verstanden, dass sich die Räder der ersten Fahrzeugachse relativ zu den Rädern der weiteren Fahrzeugachse langsamer drehen, d. h. insbesondere einen höheren Bremsschlupf aufweisen, während bei einem Unterbremsen die Räder der ersten Fahrzeugachse einen geringeren Bremsschlupf aufweisen als die Räder der weiteren Fahrzeugachse, d. h. schneller drehen.

Zum Messen des Raddrehverhaltens an den Rädern, denen ein Drucksteuerventil zugeordnet ist, werden beispielsweise im ABS-Bremssystem vorhandene ABS-Radsensoren bzw. Drehzahlsensoren verwendet, die eine Raddrehzahl des jeweiligen Rades messen können, um daraus beispielsweise über die Winkelgeschwindigkeit des Rades das Raddrehverhalten, d. h. insbesondere einen achsweisen Radschlupf bzw. einen Differenzschlupf bestimmen zu können. Das Raddrehverhalten wird hierbei permanent überwacht, so dass aus den Raddrehzahlen der entsprechenden Räder der Radschlupf und darüber der Differenzschlupf ständig bestimmt und über eine Ansteuerung der Drucksteuerventile entsprechend angepasst werden kann.

Das Ist-Raddrehverhalten wird hierbei durch eine entsprechende Berechnung der Ansteuerzeiten an ein vorgegebenes Soll-Raddrehverhalten angenähert. Somit ist vorgesehen, die Blockierneigung der ersten Fahrzeugachse an die Blockierneigung der weiteren Fahrzeugachse anzugleichen. Es kann auch vorgesehen sein, mehr als ein Ist-Raddrehverhalten zu betrachten, beispielsweise zusätzlich den Unterschied im Raddrehverhalten zwischen der Vorderachse und einer zweiten Hinterachse.

Die berechneten Ansteuerzeiten sowie die Korrektur-Ansteuerzeiten werden somit im ersten und im zweiten Berechnungsschritt für das jeweilige Drucksteuerventil derartig berechnet, dass sowohl die Fahrzeug-Ist-Verzögerung auf die Fahrzeug-Soll-Verzögerung als auch das mindestens eine Ist-Raddrehverhalten auf das jeweilige Soll-Raddrehverhalten geregelt wird, wobei sich beide Berechnungsschritte lediglich dadurch unterscheiden, dass eine unterschiedliche Anzahl an Drucksteuerventilen zugrunde gelegt wird. Falls eine Mindest-Ansteuerzeit unterschritten wurde, findet im Rahmen des erfindungsgemäßen Verfahrens zum Bewirken der Bremsanforderung auch lediglich eine Ansteuerung derjenigen Drucksteuerventile statt, für die eine Korrektur-Ansteuerzeit berechnet wurde. Alle anderen Drucksteuerventile tragen nicht zur erfindungsgemäßen Bremsung bei, da diese bei der Berechnung der Korrektur-Ansteuerzeiten nicht berücksichtigt werden. D. h. die Fahrzeug-Soll-Verzögerung wird im Rahmen der Erfindung nur durch die zweite Anzahl an Drucksteuerventilen bzw. den jeweiligen Drucksteuerventilen zugeordneten Radbremsen durchgesetzt.

Um bei einem Unterschreiten der Mindest-Ansteuerzeit die Genauigkeit und die Zuverlässigkeit bei einer Bremsung weiter zu verbessern, ist vorzugsweise vorgesehen, die zweite Anzahl an Drucksteuerventile so weit wie möglich zu reduzieren, so dass die Korrektur-Ansteuerzeit so nah wie möglich an die jeweilige Mindest-Ansteuerzeit angenähert werden kann und diese ggf. auch überschreitet. Dazu ist vorteilhafterweise eine Fallunterscheidung vorgesehen:
Unterschreiten die berechneten Ansteuerzeiten aller betrachteten Drucksteuerventile die jeweilig zugeordnete Mindest-Ansteuerzeit, wird in einer vorteilhaften Ausführungsform zunächst ermittelt, welche Ansteuerzeit am geringsten von der jeweils zugeordneten Mindest-Ansteuerzeit abweicht. Für das dieser am wenigsten abweichenden Ansteuerzeit zugeordnete Drucksteuerventil wird dann eine Korrektur-Ansteuerzeit berechnet und die Ansteuerzeiten aller anderen Drucksteuerventile werden nicht nachberechnet und auch nicht angesteuert, so dass lediglich ein Drucksteuerventil bzw. eine Radbremse zur Bremsung beiträgt, d. h. die Fahrzeug-Soll-Verzögerung umsetzt und dementsprechend die Bremswirkung aller anderen, nicht angesteuerten Drucksteuerventile kompensiert. Die Korrektur-Ansteuerzeit steigt entsprechend stark an. Vorteilhafterweise wird, falls auch die Korrektur-Ansteuerzeit für das entsprechende Drucksteuerventil die Mindest-Ansteuerzeit dieses Drucksteuerventils unterschreitet, die Korrektur-Ansteuerzeit auf die Mindest-Ansteuerzeit angehoben, um das Bremsziel in der gewollten Höhe mit hoher Sicherheit zu erreichen.

In einer alternativen Ausführungsform wird in dem Fall, das bei der ersten Berechnung von Ansteuerzeiten für alle Drucksteuerventile Ansteuerzeiten kleiner der jeweilig zugeordneten Mindest-Ansteuerzeit berechnet worden sind, zuerst ermittelt, für welches Drucksteuerventil eine Ansteuerzeit berechnet wurde, die am weitesten von der diesem Drucksteuerventil zugeordneten Mindest-Ansteuerzeit abweicht. Anschließend wird für alle verbliebenen, d. h. für alle außer diesem einen Drucksteuerventil mit der ermittelten größten Abweichung der Ansteuerzeit, eine Neuberechnung von Korrektur-Ansteuerzeiten durchgeführt. In dem Fall, dass bei der Neuberechnung der Korrektur-Ansteuerzeiten für die verbliebenen Drucksteuerventile wiederum für alle neuberechneten Drucksteuerventile eine Korrektur-Ansteuerzeit kleiner als der dem jeweiligen Drucksteuerventil zugeordneten Mindest-Ansteuerzeit berechnet wird, wird eine weitere Neuberechnung ohne Berücksichtigung des Drucksteuerventils, das am weitesten abweicht, durchgeführt. Diese Neuberechnung erfolgt bis zu dem Zeitpunkt, bis auch für das letzte der für eine Regelung zur Verfügung stehenden Drucksteuerventile immer noch eine Ansteuerzeit kleiner der diesem Drucksteuerventil zugeordneten Mindest-Ansteuerzeit berechnet wird. In diesem Fall wird die Korrektur-Ansteuerzeit für dieses letzte Drucksteuerventil auf die dem Drucksteuerventil zugeordnete Mindest-Ansteuerzeit angehoben und lediglich dieses Drucksteuerventil zum Abbremsen verwendet.

Unterschreiten in einem Taktzyklus, d. h. in einer Phase von Berechnungen von neuen Ansteuerzeiten, bei der ersten Berechnung von Ansteuerzeiten nicht alle Ansteuerzeiten die jeweils zugeordnete Mindest-Ansteuerzeit, so bleiben die Drucksteuerventile, deren Ansteuerzeiten die jeweilige Mindest-Ansteuerzeit unterschreiten, bei der Neuberechnung und auch bei der Ansteuerung unberücksichtigt. Für die anderen Drucksteuerventile, für die die Mindest-Ansteuerzeit in dem Fall überschritten ist - oder die gleich der Mindest-Ansteuerzeit sind - wird eine Korrektur-Ansteuerzeit berechnet, die die Bremswirkung der weggefallenen Drucksteuerventile kompensiert und die dann für das jeweilige Drucksteuerventil auf jeden Fall oberhalb der Mindest-Ansteuerzeit liegt; das Bremsziel kann also sicher und zuverlässig erreicht werden, ohne dass es dabei zu einer über die Fahrzeug-Soll-Verzögerung hinausgehende Bremsung kommt, die entsprechend nachgeregelt werden muss.

Dadurch wird vorteilhafterweise erreicht, dass bei einer Bremsung, bei der durch die Berechnungen der Ansteuerzeiten der Drucksteuerventile erreicht werden soll, dass sich sowohl die Fahrzeug-Ist-Verzögerung an eine vorgegebene Fahrzeug-Soll-Verzögerung anpasst als auch gleichzeitig ein wunschgemäßes Ist-Raddrehverhalten zwischen Rädern von Achsen des Fahrzeugs einstellt wird, erfindungsgemäß eine Radbremse an einer Fahrzeugachse betätigt, die am geeignetsten ist, um ein Überbremsen oder Unterbremsen zu vermeiden, da die Berechnung der Ansteuerzeiten bzw. der Korrektur-Ansteuerzeiten in Abhängigkeit des Ist-Raddrehverhaltens erfolgt und die Radbremse am geeignetsten ist, deren Ansteuerzeit am höchsten ist. Die Auswahl der Radbremsen bzw. der Drucksteuerventile, für die eine Korrektur-Ansteuerzeit ermittelt wird, wechseln hierbei während des Bremsvorganges ständig, da sich das Ist-Raddrehverhalten aufgrund der Bremsung verändert, d. h. sich auch die Ansteuerzeiten ständig verändern. Somit wird in jeder Bremssituation das geeignetste Drucksteuerventil ausgewählt, um insbesondere bei einem rampenförmigen Verlauf einer Bremsanforderung eine optimierte Stufbarkeit der Bremsung zu erreichen, womit insgesamt das Bremsverhalten aus den bereits genannten Gründen beruhigt und optimiert wird.

Beim Ansteuern der Drucksteuerventile zum Bewirken der Fahrzeug-Soll-Verzögerung, beispielsweise bei einem rampenförmigen Verlauf der Fahrzeug-Soll-Verzögerung über die Zeit und/oder eines wunschgemäßen bzw. vorgebenden Soll-Radrehverhaltens der Räder eines Achspaares wird zwischen zwei Taktzyklen eine feste Wartezeit abgewartet, bevor neue Ansteuerzeiten berechnet werden, um bei erfolgter Bremsung eine Reaktion des Fahrzeuges in Bezug zu seiner Fahrzeug-Ist-Verzögerung und/oder eines Ist-Raddrehverhaltens abzuwarten. D. h. es werden insbesondere Totzeiten abgewartet, bis sich eine Druckänderung in den Radbremsen auch auf jeden Fall in einem ermittelten Raddrehverhalten eingestellt hat. Nach dieser Wartezeit können dann in zuverlässiger Weise aus der entsprechend veränderten Fahrzeug-Ist-Verzögerung und/oder dem veränderten Ist-Raddrehverhalten wieder auf das aktuelle Fahr- und Bremsverhalten des Fahrzeuges abgestimmte Ansteuerzeiten berechnet und ggf. korrigiert werden. Die feste Wartezeit entspricht hierbei einer Mindest-Wartezeit von beispielsweise 250ms.

Gemäß einer alternativen Ausführungsform ist zum zusätzlichen Verbessern der Genauigkeit des Bewirkens der Fahrzeug-Soll-Verzögerung durch die Fahrzeug-Ist-Verzögerung durch die nächstfolgende Druckaussteuerung und der Stufbarkeit vorgesehen, zwischen zwei Taktzyklen eine variable Wartezeit anzusetzen, die größer oder gleich der Mindest-Wartezeit ist. Die Wartezeit wird hierbei derartig gewählt, dass die Korrektur-Ansteuerzeit für jedes anzusteuernde Drucksteuerventil in jedem Fall gleich oder größer der Mindest-Ansteuerzeit für dieses Drucksteuerventil ist. Dazu wird nach einem abgeschlossenen Taktzyklus, in dem Drucksteuerventile angesteuert wurden, zunächst die Mindest-Wartezeit von beispielsweise 250ms abgewartet. Nach Ablauf der gesetzten Mindest-Wartezeit werden für den nächstfolgenden Taktzyklus im ersten Berechnungsschritt Ansteuerzeiten nach dem erfindungsgemäßen Prinzip berechnet und für den Fall, dass auch nach einer Neuberechnung im zweiten Berechnungsschritt die Korrektur-Ansteuerzeit für das letzte für eine Regelung zur Verfügung stehende Drucksteuerventil kleiner als die jeweils zugeordnete Mindest-Ansteuerzeit für dieses Drucksteuerventil ist, findet zunächst keine Ansteuerung von Drucksteuerventilen statt.

Stattdessen wird nach einem festgelegten Zeitintervall von beispielsweise 10ms erneut eine Neuberechnung derartig durchgeführt, dass entweder für alle Drucksteuerventile Korrektur-Ansteuerzeiten berechnet werden oder aber lediglich für das letzte für eine Regelung zur Verfügung stehende Drucksteuerventil, für das bereits Korrektur-Ansteuerzeiten berechnet wurden. Liegt auch nach dem Zeitintervall von 10ms, d.h. nach insgesamt 260ms seit dem letzten Taktzyklus, die Korrektur-Ansteuerzeit für die betreffenden Drucksteuerventil unterhalb der Mindest-Ansteuerzeit wird nach weiteren 10ms erneut neuberechnet.

Die Korrektur-Ansteuerzeit wird somit sukzessive dahingehend geprüft, ob die jeweilige Mindest-Ansteuerzeit nach einem oder mehreren Zeitintervallen erreicht ist, wobei die Korrektur-Ansteuerzeit dadurch ansteigt, dass die Fahrzeug-Soll-Verzögerung mit der Zeit ebenfalls beispielsweise rampenförmig ansteigt. Erst wenn die jeweilige Korrektur-Ansteuerzeit größer oder gleich der entsprechenden Mindest-Ansteuerzeit ist, erfolgt eine Ansteuerung des entsprechenden Drucksteuerventils mit der ermittelten Korrektur-Ansteuerzeit.

Somit kann vorteilhafterweise verhindert werden, dass eine Korrektur-Ansteuerzeit des letzten für eine Regelung zur Verfügung stehenden Drucksteuerventils zwangsweise auf die Mindest-Ansteuerzeit anzuheben ist und dadurch eine höhere Fahrzeug-Ist-Verzögerung eingestellt wird als tatsächlich angefordert. Dadurch kann die Genauigkeit beim Bewirken der Fahrzeug-Soll-Verzögerung und die Stufbarkeit bei der Bremsung verbessert und allgemein das Bremsverhalten beruhigt werden, da weniger nachgeregelt werden muss und erst dann eine Ansteuerung zumindest eines Drucksteuerventils erfolgt, wenn die angeforderte Fahrzeug-Soll-Verzögerung durch die nächstfolgende Druckaussteuerung nicht mehr überschritten wird.

Dies kommt insbesondere dann zum Tragen, wenn insbesondere bei einem Fahrzeug mit keiner oder nur geringer Beladung, d. h. einem in der Beladungssituation vorhandenen hohen Potenzial an zu bewirkender Fahrzeug-Ist-Verzögerung durch die Fahrzeugbremsanlage, die für ein voll beladenes Fahrzeug ausgelegt ist, die Fahrzeug-Soll-Verzögerung mit einem rampenförmigen zeitabhängigen Verlauf sehr langsam ansteigt oder abfällt. Dann ist in zwei aufeinanderfolgenden Taktzyklen der Unterschied in der Fahrzeug-Soll-Verzögerung unter Umständen so gering, dass die dementsprechende Korrektur-Ansteuerzeit unter der Mindest-Ansteuerzeit liegt. Durch eine zeitliche Ausdehnung der aufeinanderfolgenden Ansteuerungen der jeweiligen Drucksteuerventile wird die jeweilig nächstfolgende Ansteuerzeit an die dann zu bewirkende Änderung in der Fahrzeug-Soll-Verzögerung angepasst. Bei einem sehr steilen Anstieg oder Abfall hingegen ist zu erwarten, dass die Änderung der Fahrzeug-Soll-Verzögerung auf der Rampe einer höheren Korrektur-Ansteuerzeit entspricht bzw. eine Korrektur von ursprünglich berechneten Ansteuerzeiten nicht nötig ist.

Vorteilhafterweise kann bei einem Überschreiten der Mindest-Ansteuerzeit aufgrund einer Korrektur der Ansteuerzeiten des jeweiligen Drucksteuerventils das Ansteuern dieses Drucksteuerventils in mehrere Regelungsschritte bzw. Ansteuerzyklen aufgeteilt werden, wenn die Korrektur-Ansteuerzeit die Mindest-Ansteuerzeit um einen bestimmten Betrag überschreitet. Dadurch kann vorteilhafterweise die Stufbarkeit einer Bremsung weiter verbessert werden, da beispielsweise eine Korrektur-Ansteuerzeit in zwei oder mehrere Ansteuerzyklen, die jeweils größer sind als die Mindest-Ansteuerzeit, aufgeteilt werden kann.

Vorzugsweise weist jedes Drucksteuerventil ein Einlassventil und ein Auslassventil auf, die jeweils als getaktet bzw. gepulst angesteuerte 2/2-Wegeventile ausgeführt sind. Demnach findet auch eine zweigeteilte Betrachtung der Ansteuerzeiten statt, d. h. es wird jeweils paarweise eine Einlassventil-Ansteuerzeit für das Einlassventil und eine Auslassventil-Ansteuerzeit für das Auslassventil berechnet, wobei diese Berechnung nach den oben ausgeführten erfindungsgemäßen Prinzipien stattfindet. D. h. sowohl dem Auslassventil als auch dem Einlassventil eines jeweiligen Drucksteuerventils ist jeweils eine Auslassventil-Mindest-Ansteuerzeit bzw. eine Einlassventil-Mindest-Ansteuerzeit zugeordnet.

Liegt eine Bremsanforderung in Form einer Fahrzeug-Soll-Verzögerung vor, wird somit für die Einlassventile und die Auslassventile jedes Drucksteuerventils eine Auslassventil-Ansteuerzeit und eine Einlassventil-Ansteuerzeit berechnet und diese mit der jeweilig zugeordneten Auslassventil-Mindest-Ansteuerzeit bzw. der Einlassventil-Mindest-Ansteuerzeit verglichen. Bei einem Unterschreiten der Ansteuerzeiten für das Einlassventil oder das Auslassventil eines Drucksteuerventils findet eine entsprechende paarweise Neuberechnung von Korrektur-Einlassventil-Ansteuerzeiten und Korrektur-Auslassventil-Ansteuerzeiten für die Einlassventile bzw. Auslassventile der jeweiligen Drucksteuerventile statt, wobei berücksichtigt wird, dass danach eine geringere Anzahl an Drucksteuerventilen angesteuert wird. Die Auswahl der anzusteuernden Drucksteuerventile erfolgt hierbei beispielsweise in Abhängigkeit davon, bei welchem Drucksteuerventil die Auslassventil-Ansteuerzeit und/oder die Einlassventil-Ansteuerzeit näher an der jeweiligen Mindest-Ansteuerzeit für das Auslassventil bzw. das Einlassventil liegt.

Gemäß einer bevorzugten Ausführungsform finden die erfindungsgemäßen Berechnungen der Ansteuerzeiten achsweise statt, d. h. in den entsprechenden Berechnungsschritten wird insbesondere ein Ist-Raddrehverhalten berücksichtigt, dass beispielsweise aus einem Mittelwert der Drehverhalten der Räder an einer Fahrzeugachse folgt. Somit wird berücksichtigt, wie stark eine Fahrzeugachse in ihrer Gesamtheit gegenüber einer anderen Fahrzeugachse ebenfalls in ihrer Gesamtheit überbremst oder unterbremst ist. Aber auch die Neuberechnung im zweiten oder weiteren Berechnungsschritt findet insbesondere in Abhängigkeit von Mittelwerten für die Mindest-Ansteuerzeiten von Drucksteuerventilen an allen Rädern einer Fahrzeugachse statt. Demnach wird bei der Berechnung der Korrektur-Ansteuerzeiten auch eine achsweise Ansteuerung von vorzugsweise zwei Radbremsen gleichzeitig berücksichtigt, die zum Erreichen der Regelziele - zwischenachsiges Soll-Raddrehverhalten und Fahrzeug-Soll-Verzögerung - am geeignetsten sind. Es findet also immer eine achsweise Betrachtung der Bremsung statt.

Ob eine Berechnung der Ansteuerzeiten aus einer radweisen oder einer achsweisen Betrachtung folgt, ist beispielsweise abhängig von Stabilitätsanforderungen. Demnach ist beispielsweise bei einer Bremsanforderung von einer ACC-Regelung oder einer AEBS-Regelung eine achsweise Betrachtung sinnvoller, da das Abbremsen von einzelnen Rädern zu einem ungewollten Stabilitätsverlust führen kann. Bei einer Umkipp-Verhinderung (RSC) hingegen ist es sinnvoller, lediglich die kurvenäußeren Räder zu betrachten, da die kurveninneren Räder bei einem drohenden Umkippen des Fahrzeugs nicht oder weniger zur Bremsung beitragen bzw. beitragen können. Somit ist die Betrachtung im Wesentlichen in Abhängigkeit davon zu wählen, ob lediglich Längsbeschleunigungen des Fahrzeuges relevant sind, z.B. bei ACC, AEBS, EBD oder EBL-Bremsungen, oder auch Querbeschleunigungen, z.B. bei RSC oder YC-Bremsungen bzw. Bremsvorgängen, eine Rolle spielen.

Für den Fall, dass alle im ersten Berechnungsschritt berechneten Ansteuerzeiten die jeweilig zugeordneten Mindest-Ansteuerzeiten überschreiten, findet keine Neuberechnung statt, da das Bremsziel bereits sicher und zuverlässig erreicht werden kann, ohne dass es dabei zu einer über die Fahrzeug-Soll-Verzögerung hinausgehenden Bremsung kommt, die entsprechend nachgeregelt werden muss.

Vorzugsweise ist das Soll-Raddrehverhalten zusätzlich abhängig von der ermittelten Fahrzeug-Soll-Verzögerung und/oder der ermittelten Fahrzeug-Ist-Verzögerung. Beispielsweise kann das Soll-Raddrehverhalten bei steigender Fahrzeug-Soll-Verzögerung bzw. Fahrzeug-Ist-Verzögerung derartig in Richtung eines synchronen Raddrehverhaltens der Räder der ersten Fahrzeugachse und der weiteren Fahrzeugachse abfallen, dass einem frühzeitigen Blockieren der ersten Fahrzeugachse oder der zweiten Fahrzeugachse entgegengewirkt wird; die Sicherheit und der Bremskomfort steigen.

Vorzugsweise können die Mindest-Ansteuerzeiten bzw. die Einlassventil-Mindest-Ansteuerzeiten und die Auslassventil-Mindest-Ansteuerzeiten jeweils konstant sein und vorab festgelegt werden oder aber auch variabel. Demnach kann beispielsweise vorgesehen sein, die jeweilige Mindest-Ansteuerzeit in Abhängigkeit einer Temperatur des jeweiligen Ventilkörpers, einer Art bzw. Bauform des jeweiligen Ventils oder der Fahrzeugachse, an der das Drucksteuerventil angeordnet ist, einzustellen. Dadurch kann die Regelung vorteilhafterweise genauer und sicherer erfolgen, da auch eine Korrektur der Ansteuerzeiten lediglich dann stattfindet, wenn die tatsächliche Mindest-Ansteuerzeit unterschritten wurde.

Da eine Ansteuerung von weniger als allen im Fahrzeug für eine Regelung verfügbaren Drucksteuerventilen stattfindet und daher vorteilhafterweise auch weniger nachzuregeln ist, sinkt zudem das vom Fahrer wahrgenommene Geräuschniveau.

Die Erfindung wird im Folgenden anhand der beiliegenden Zeichnungen näher erläutert. Es zeigen:
- Fig. 1: ein Nutzfahrzeug mit einem ABS-Bremssystem;
- Fig. 2: ein beispielhafter Verlauf einer Fahrzeug-Soll-Verzögerung;
- Fig.3: ein Flussdiagramm zur Durchführung des erfindungsgemäßen Verfahrens

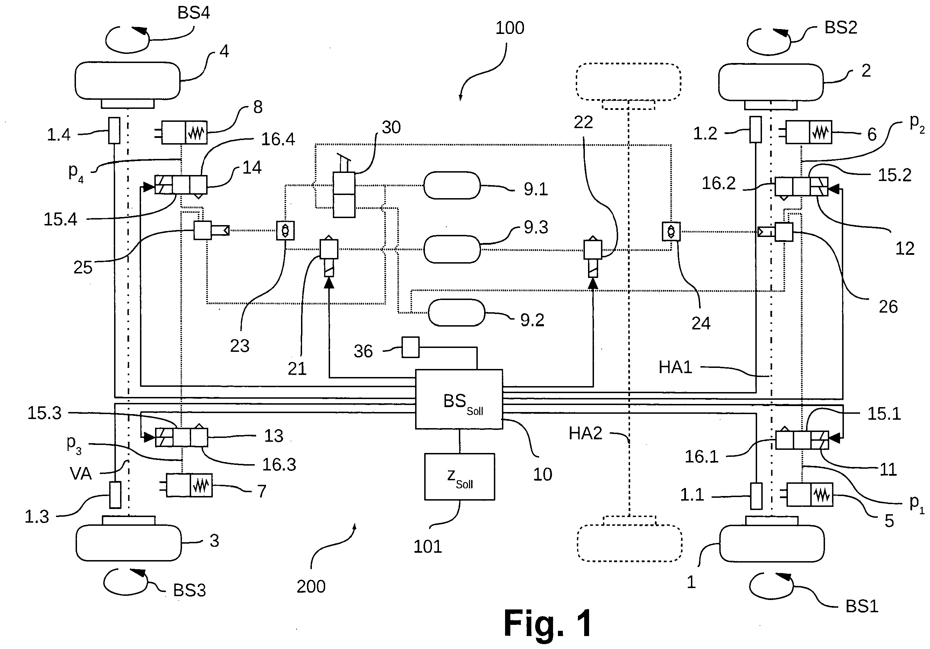

Die Figur 1 zeigt ein Fahrzeug 100 mit einem elektronisch gesteuerten Bremssystem 200 mit den hier relevanten Komponenten. Demnach ist eine erste Hinterachse HA1 mit Hinterrädern 1, 2 sowie eine Vorderachse VA mit Vorderrädern 3, 4 vorgesehen. Eine mögliche zweite Hinterachse HA2 ist lediglich gestrichelt angedeutet. Die Hinterräder 1, 2 können über hintere Radbremsen 5, 6 die Vorderräder 3, 4 über vordere Radbremsen 7, 8 abgebremst werden. Das Bremssystem 200 kann ein elektro-hydraulisches oder elektro-pneumatisches Bremssystem sein, d. h. es wird ein Flüssigkeitsdruck oder ein Luftdruck ausgesteuert.

Zur bremsschlupfgeregelten Abbremsung weist das Bremssystem 200 ein Antiblockiersystem (ABS) mit einer Steuereinrichtung 10 auf, die Drucksteuerventile - hier in Form von ABS-Steuerventilen 11, 12, 13, 14 - in Abhängigkeit eines erfassten Bremsschlupfs BS₁, BS₂, BS₃, BS₄ an dem jeweiligen Rad 1, 2, 3, 4 gepulst ansteuert. Ermittelt wird von der Steuereinrichtung 10 der Bremsschlupf BS₁, BS₂, BS₃, BS₄ der Räder 1, 2, 3, 4 über Drehzahlsensoren 1.1, 1.2, 1.3, 1.4, mit deren Messsignalen von der Steuereinheit 10 die an den jeweiligen Rädern 1, 2, 3, 4 aktuelle Raddrehzahl n₁, n₂, n₃, n₄ ermittelt wird, um darüber den Bremsschlupf BS₁, BS₂, BS₃, BS₄ zu bestimmen.

Gemäß diesem Ausführungsbeispiel ist eine erste Anzahl A1 von vier ABS-Steuerventilen 11, 12, 13, 14 vorgesehen. Jedes ABS-Steuerventil 11, 12, 13, 14 weist ein jeweils als 2/2-Wege-Magnetventil ausgeführtes Einlassventil 15.i; i=1,...,4 und ein Auslassventil 16.i; i=1,...,4 auf, die je nach Ansteuerung durch eine Steuereinrichtung 10 in eine geöffnete Stellung oder eine geschlossene Stellung überführt werden können, so dass durch das ABS-Steuerventil 11, 12, 13, 14 ein Bremsdruck p₁, p₂, p₃, p₄ an der jeweiligen Radbremse 5, 6, 7, 8 gehalten, erhöht oder gesenkt werden kann. Im Folgenden ist ohne spezielle Angabe eines Wertes für den Index "i" jeweils gemeint, dass Auslassventile 16.i und Einlassventile 15.i mit gleichem Wert für "i" zu demselben ABS-Steuerventil 11, 12, 13, 14 gehören. Auch weitere mit "i" indexierte Bezugszeichen beziehen sich jeweils auf das Einlassventil 15.i bzw. das Auslassventil 16.i mit dem jeweiligen Index "i".

Ist ein Einlassventil 15.i geöffnet und das jeweilige Auslassventil 16.i (gleiches "i") gesperrt, können die entsprechenden Radbremsen 5, 6, 7, 8 mit einem von Druckvorratsbehältern 9.1, 9.2 für den entsprechenden Bremskreis bereitgestellten und von einem Bremsventil 30 und Relaisventilen 25, 26 ausgesteuerten Bremsdruck p₁, p₂, p₃, p₄ beaufschlagt und somit eine entsprechende Bremsung durch die Räder 1, 2, 3, 4 bewirkt werden. Ist das Einlassventil 15.i gesperrt und das jeweilige Auslassventil 16.i geöffnet, werden die hinteren und vorderen Radbremsen 5, 6, 7, 8 entlüftet und die Bremswirkungen durch die Räder 1, 2, 3, 4 reduziert. Ist sowohl das Einlassventil 15.i als auch das jeweilige Auslassventil 16.i gesperrt, wird ein an den hinteren und den vorderen Radbremsen 5, 6, 7, 8 wirkender Bremsdruck p₁, p₂, p₃, p₄ gehalten.

Die Bremsdrücke p₁, p₂, p₃, p₄ an den jeweiligen Radbremsen 5, 6, 7, 8 der Räder 1, 2, 3, 4 können von der Steuereinrichtung 10 radindividuell eingestellt werden, so dass entsprechend auf einen Fall einer Überschreitung eines Soll-Bremsschlupfs BS_{Soll} an einem der Räder 1, 2, 3, 4 reagiert werden kann. Das heißt, wird von der Steuereinrichtung 10 erkannt, dass beispielsweise der Bremsschlupf BS₃ an dem linken Vorderrad 3 von einem Soll-Bremsschlupf BS_{Soll} überschreitend abweicht, d. h. das linke Vorderrad 3 dazu neigt, zu schlüpfen bzw. zu blockieren, veranlasst die Steuereinrichtung 10 ein Druckhalten oder ein Drucksenken des Bremsdruckes p₃ an der Radbremse 7 durch entsprechendes Ansteuern des ABS-Steuerventils 13.

Gesteuert werden die ABS-Steuerventile 11, 12, 13, 14 von der Steuereinrichtung 10, indem das jeweilige ABS-Steuerventil 11, 12, 13, 14 bzw. das Einlassventil 15.i und/oder das Auslassventil 16.i des jeweiligen ABS-Steuerventils 11, 12, 13, 14 gepulst über eine Ansteuerzeit Δt_{EV}.i, Δt_{AV}.i ; i=1,...,4 angesteuert werden, so dass eine bestimmte Druckdifferenz Δp₁, Δp₂, Δp₃, Δp₄ an dem jeweiligen ABS-Steuerventil 11, 12, 13, 14 eingestellt wird, die eine entsprechende Bremsung an diesem Rad 1, 2, 3, 4 bewirkt, um auf den Soll-Bremsschlupf BS_{Soll} zu regeln.

Neben dem Antiblockiersystem kann eine Bremsanforderung auch von einem beliebigen Fahrerassistenzsystem bzw. Stabilitäts-Kontrollsystem, beispielsweise ein Stabilitätsprogramm (ESP), eine Abstandsregelung (ACC), eine Umkipp-Verhinderung (RSC), ein Notbremssystem (AEBS), eine Antischlupfregelung (ASR) oder eine Gierratensteuerung (YC), oder in Abhängigkeit einer Fahrerbremsung, beispielsweise durch eine Bremskraftlimitierung (EBL) oder einer Bremskraftverteilung (EBD) vorgegeben werden. Dazu wird entweder in einem externen Steuergerät 101 des entsprechenden Fahrerassistenzsystems eine Fahrzeug-Soll-Verzögerung z_{Soll} ermittelt und diese direkt an die Steuereinheit 10 ausgeben, die daraufhin eine entsprechende Druckdifferenz Δp₁, Δp₂, Δp₃, Δp₄ zur Ansteuerung des jeweiligen ABS-Steuerventils 11, 12, 13, 14 bestimmt, oder das externe Steuergerät 101 ermittelt direkt eine der Fahrzeug-Soll-Verzögerung z_{Soll} entsprechende Druckdifferenz Δp₁, Δp₂, Δp₃, Δp₄ und gibt diese zur Ansteuerung des jeweiligen ABS-Steuerventils 11, 12, 13, 14 an die Steuereinheit 10 aus.

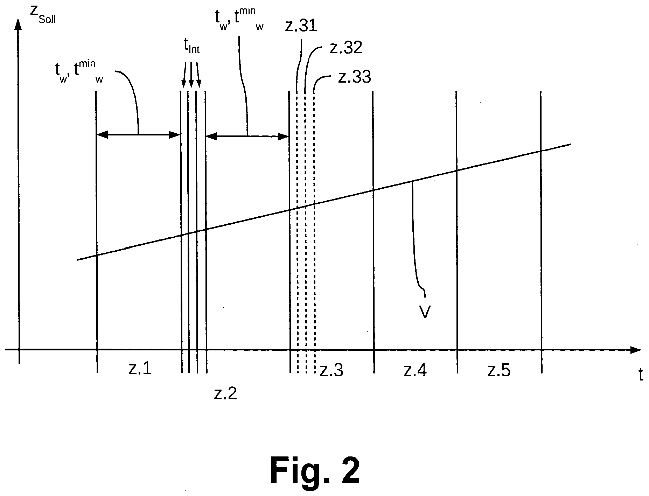

Die Fahrzeug-Soll-Verzögerung z_{Soll} kann hierbei beispielsweise rampenförmig über die Zeit t verlaufen, wie beispielsweise im Verlauf V in Fig. 2 dargestellt, wobei zum Bewirken dieser rampenförmigen Fahrzeug-Soll-Verzögerung z_{Soll} der Verlauf V in Taktzyklen z.i unterteilt wird und zu Beginn jedes Taktzyklus z.i eine Ansteuerung der entsprechenden ABS-Steuerventile 11, 12, 13 ,14 erfolgt, um die zu diesem Zeitpunkt t auf der Rampe liegende Fahrzeug-Soll-Verzögerung z_{Soll} anzufordern.

Die Berechnung der Druckdifferenz Δp₁, Δp₂, Δp₃, Δp₄ erfolgt insbesondere in Abhängigkeit davon, wie stark eine tatsächlich vorliegende Fahrzeug-Ist-Verzögerung z_{Ist} von der vorgegebenen Fahrzeug-Soll-Verzögerung z_{Soll} abweicht sowie in Abhängigkeit von einem Ist-Raddrehverhalten ds_{Ist}, das durch einen Unterschied in einem Differenzschlupf ds oder einer Winkelgeschwindigkeit ω zwischen Rädern 1, 2, 3, 4 unterschiedlicher Fahrzeugachsen VA, HA1, HA2 charakterisiert ist, wobei dies aus dem jeweiligen über die Drehzahlsensoren 1.1, 1.2, 1.3, 1.4 ermittelten Bremsschlupf BS₁, BS₂, BS₃, BS₄ bzw. den Drehzahlen n₁, n₂, n₃, n₄ folgt. Demnach gibt das Ist-Raddrehverhalten ds_{Ist} an, wie stark beispielsweise die Vorderachse VA (erste Fahrzeugachse) oder einzelne Räder 3, 4 der Vorderachse VA in Relation zur ersten Hinterachse HA1 (weitere Fahrzeugachse) oder einzelnen Rädern 1, 2 der ersten Hinterachse HA 1 überbremst oder unterbremst ist. Zusätzlich oder alternativ kann auch der Unterschied im Drehverhalten zwischen Rädern 3, 4 der Vorderachse VA und Rädern der zweiten Hinterachse HA2 betrachtet werden.

Ist beispielsweise der Bremsschlupf BS₁, BS₂ an der ersten Hinterachse HA1 größer als der Bremsschlupf BS₃, BS₄ an der Vorderachse VA, wobei in diesem Beispiel jeweils Mittelwerte der Bremsschlüpfe BS₁, BS₂ bzw. BS₃, BS₄ einer Fahrzeugachse VA, HA1, HA2 betrachtet werden, so ist die erste Hinterachse HA1 relativ zur Vorderachse VA überbremst. Dementsprechend ist zum Anpassen der Blockierneigung der ersten Hinterachse HA1 an die Vorderachse VA, d. h. zum Anpassen des Ist-Raddrehverhaltens ds_{Ist} an ein Soll-Raddrehverhalten ds_{Soll} bei gleichzeitiger Beibehaltung der angeforderten Fahrzeug-Soll-Verzögerung z_{Soll} der Bremsdruck p₁, p₂ an den hinteren Radbremsen 5, 6 zu reduzieren, d. h. Δp₁, Δp₂ sind negativ zu wählen, und der Bremsdruck p₃, p₄ an den vorderen Radbremsen 7, 8 zu erhöhen, d. h. Δp₃, Δp₄ ist positiv zu wählen. Dies geschieht durch eine entsprechende Berechnung der Druckdifferenzen Δp₁, Δp₂, Δp₃, Δp₄, die für jede der Radbremsen 5, 6, 7, 8 oder zumindest achsweise für die betrachteten Fahrzeugachsen VA, HA1, HA2 unterschiedlich sein kann, und entsprechendes Ansteuern einer vorgegebenen Anzahl an Radbremsen 5, 6, 7, 8 mit diesen Druckdifferenzen Δp₁, Δp₂, Δp₃, Δp₄ zum Erreichen der Regelziele, d. h. z_{Soll} und ds_{Soll}.

Es wird also zunächst die Abweichung der Fahrzeug-Ist-Verzögerung z_{Ist} von der Fahrzeug-Soll-Verzögerung z_{Soll} ermittelt, die durch die ausgesteuerten Druckdifferenzen Δp₁, Δp₂, Δp₃, Δp₄ an den Radbremsen 5, 6, 7, 8 durch die berechneten Ansteuerzeiten Δt_{EV}.i, Δt_{AV}.i auszugleichen ist, wobei diese Abweichung dann in Abhängigkeit des Ist-Raddrehverhaltens ds_{Ist} auf die Fahrzeugachsen VA, HA1, HA2 entsprechend verteilt wird, indem die Druckdifferenzen Δp₁, Δp₂, Δp₃, Δp₄ entsprechend eingestellt werden. Das Regelziel, die Fahrzeug-Soll-Verzögerung z_{Soll} zu erreichen, ist somit vorrangig vor dem Regelziel, das Soll-Raddrehverhalten ds_{Soll} zu erreichen.

Um aus der angeforderten Druckdifferenz Δp₁, Δp₂, Δp₃, Δp₄ eine Ansteuerzeit Δt_{EV}.i (Einlassventil-Ansteuerzeit), Δt_{AV}.i (Auslassventil-Ansteuerzeit) zu bestimmen, innerhalb derer das Einlassventil 15.i bzw. das Auslassventil 16.i des jeweiligen ABS-Steuerventils 11, 12, 13, 14 gepulst anzusteuern ist, um die Druckdifferenz Δp₁, Δp₂, Δp₃, Δp₄ zu bewirken, wird bei einer angeforderten Druckdifferenz Δp₁, Δp₂, Δp₃, Δp₄ in Richtung einer Erhöhung des Bremsdrucks Δp₁, Δp₂, Δp₃, Δp₄ auf eine in der Steuereinheit 10 gespeicherte erste Druckdifferenz-Kennlinie K₁ für das jeweilige Einlassventil 15.i und bei einer angeforderten Druckdifferenz Δp₁, Δp₂, Δp₃, Δp₄ in Richtung einer Verringerung des Bremsdrucks Δp₁, Δp₂, Δp₃, Δp₄ auf eine zweite Druckdifferenz-Kennlinie K₂ für das jeweilige Auslassventil 16 .i zurückgegriffen. Diese beschreiben jeweils eine vorab empirisch ermittelte Abhängigkeit der jeweiligen Ansteuerzeit Δt_{EV}.i, Δt_{AV}.i von der angeforderten Druckdifferenz Δp₁, Δp₂, Δp₃, Δp₄ für das jeweilige ABS-Steuerventil 11, 12, 13, 14. Darüber werden in einem ersten Berechnungsschritt zunächst für jedes ABS-Steuerventil 11, 12, 13, 14, d. h. für die erste Anzahl A1, Ansteuerzeiten Δt_{EV}.i, Δt_{AV}.i für die Einlassventile 15.i und/oder Auslassventile 16.i berechnet.

Weicht die Fahrzeug-Ist-Verzögerung z_{Ist} von der zu bewirkenden Fahrzeug-Soll-Verzögerung z_{Soll} nach unten ab, werden lediglich Druckerhöhungen mit Einlassventilen 15.i durchgeführt, für die entsprechende Einlassventil-Ansteuerzeiten Δt_{EV}.i berechnet werden und angesteuert. Weicht hingegen die Fahrzeug-Ist-Verzögerung z_{Ist} von der zu bewirkenden Fahrzeug-Soll-Verzögerung z_{Soll} nach oben ab, werden lediglich Drucksenkungen mit Auslassventilen 16.i durchgeführt, für die entsprechende Auslassventil-Ansteuerzeiten Δt_{AV}.i berechnet werden.

Ist in einem Taktzyklus die Fahrzeug-Ist-Verzögerung z_{Ist} gleich der zu bewirkenden Fahrzeug-Soll-Verzögerung z_{Soll} bzw. befindet sich die Fahrzeug-Ist-Verzögerung z_{Ist} innerhalb einer Toleranz um die Fahrzeug-Soll-Verzögerung z_{Soll}, und liegt gleichzeitig ein Ist-Raddrehverhalten ds_{Ist} ungleich dem Soll-Raddrehverhalten ds_{Soll} vor, bzw. liegt das Ist-Raddrehverhalten ds_{Ist} außerhalb einer Toleranz um das Soll-Raddrehverhalten ds_{Soll}, werden in einer bevorzugten Ausführungsform im nächstfolgenden Taktzyklus sowohl Drucksenkungen an Rädern 1, 2, 3, 4, für die ein höherer Schlupf ermittelt wurde, durchgeführt, für die dann Ansteuerzeiten Δt_{AV}.i für die Auslassventile berechnet werden, als auch Druckerhöhungen an Rädern, für die ein niedrigerer Schlupf ermittelt wurde, für die dann Ansteuerzeiten Δt_{EV}.i für die Einlassventile berechnet werden, d.h. in dem vorliegenden Taktzyklus werden sowohl Ansteuerzeiten Δt_{EV}.i, Δt_{AV}.i für Einlassventile 15.i als auch für Auslassventile 16.i eines ABS-Steuerventils 11, 12, 13, 14 berechnet und in entsprechender Weise angesteuert. D.h. es können gleichzeitig Ansteuerzeiten Δt_{EV}.i für Einlassventile 15.i an einer Fahrzeugachse VA, HA1, HA2 und Ansteuerzeiten Δt_{AV}.i für Auslassventile 16.i an einer anderen Fahrzeugachse VA, HA1, HA2 berechnet und angesteuert werden.

Um eine zuverlässige und sichere Regelung des Bremssystems 200 zu erreichen, werden die für ein Einlassventil 15.i und ein Auslassventil 16.i des jeweiligen ABS-Steuerventils 11, 12, 13, 14 berechneten Ansteuerzeiten Δt_{EV}.i, Δt_{AV}.i mit Mindest-Ansteuerzeiten Δt^{min}_{EV}.i, Δt^{min}_{AV}.i verglichen, wobei jedem Einlassventil 15.i und jedem Auslassventil 16.i jeweils eine beispielsweise temperaturabhängige (T) Mindest-Ansteuerzeit Δt^{min}_{EV}.i, Δt^{min}_{AV}.i zugeordnet ist, d. h. eine Einlassventil-Mindest-Ansteuerzeit Δt^{min}_{EV}.i für das Einlassventil 15.i sowie eine Auslassventil-Mindest-Ansteuerzeit Δt^{min}_{AV}.i für das Auslassventil 16.i.

Überschreiten sämtliche berechneten Ansteuerzeiten Δt_{EV}.i, Δt_{AV}.i die jeweils zugeordneten Mindest-Ansteuerzeiten Δt^{min}_{EV}.i, Δt^{min}_{AV}.i so werden die jeweiligen Ansteuerzeiten Δt_{EV}.i, Δt_{AV}.i unverändert zum Ansteuern der jeweiligen Drucksteuerventile 11, 12, 13, 14 verwendet.

Unterschreitet jedoch auch nur eine der berechneten Ansteuerzeiten Δt_{EV}.i, Δt_{AV}.i die jeweilig zugeordnete Mindest-Ansteuerzeit Δt^{min}_{EV}.i, Δt^{min}_{AV}.i, findet eine Neuberechnung der Ansteuerzeiten Δt_{EV}.i, Δt_{AV}.i statt, wobei dazu Korrektur-Ansteuerzeiten Δt^{korr}_{EV}.i (Korrektur-Einlassventil-Ansteuerzeit), Δt^{korr}_{AV}.i (Korrektur-Auslassventil-Ansteuerzeit) bestimmt werden, die somit auch die von einem ABS-Steuerventil 11, 12, 13, 14 ausgesteuerte Druckdifferenz Δp₁, Δp₂, Δp₃, Δp₄ korrigieren. Das bedeutet, dass für den Fall, dass beispielsweise lediglich für das Einlassventil 15.1 des ABS-Steuerventils 11 am linken Hinterrad 1 die Mindest-Ansteuerzeit Δt^{min}_{EV}.1 unterschritten wurde, für die ABS-Steuerventile 12, 13, 14 der anderen Räder 2, 3, 4 eine Neuberechnung der Ansteuerzeiten Δt_{EV}.i, Δt_{AV}.i stattfindet, wobei je nachdem, ob ein Druckerhöhen, ein Drucksenken oder ein Druckhalten angefordert wird, die Neuberechnung lediglich für das Einlassventil 15.i, das Auslassventil 16.i oder jeweils paarweise für das Einlassventil 15.i sowie das Auslassventil 16.i des jeweiligen ABS-Steuerventils 12, 13, 14 stattfindet, wobei nach dem folgenden Prinzip nicht für jedes ABS-Steuerventil 11 Korrektur-Ansteuerzeiten Δt^{korr}_{EV}.i, Δt^{korr}_{AV}.i berechnet werden.

Unterschreiten alle berechneten Ansteuerzeiten Δt_{EV}.i, Δt_{AV}.i die jeweilig zugeordnete Mindest-Ansteuerzeit Δt^{min}_{EV}.i, Δt^{min}_{AV}.i, so wird in einer vorteilhaften Ausführungsform zunächst ermittelt, welche der Ansteuerzeiten Δt_{EV}.i, Δt_{AV}.i am nächsten an der ihr zugeordneten Mindest-Ansteuerzeit Δt^{min}_{EV}.i, Δt^{min}_{AV}.i liegen. Für dieses ABS-Steuerventil 11, 12, 13, 14 bzw. das Einlassventil 15.i sowie das Auslassventil 16.i dieses ABS-Steuerventils 11, 12, 13, 14 werden anschließend Korrektur-Ansteuerzeiten Δt^{korr}_{EV}.i, Δt^{korr}_{AV}.i bestimmt. Die anderen ABS-Steuerventile 11, 12, 13, 14 bleiben bei der Neuberechnung unberücksichtigt und werden auch nicht angesteuert.

Die Korrektur-Ansteuerzeiten Δt^{min}_{EV}.i, Δt^{kor} _{AV}.i ergeben sich hierbei in beiden Fällen daraus, dass nun die Fahrzeug-Soll-Verzögerung z_{Soll} lediglich durch diese beiden, d. h. durch eine zweite Anzahl A2 an ABS-Steuerventilen 11, 12, 13, 14, die geringer ist als die erste Anzahl A1, durchgesetzt wird, so dass sich auch andere Druckdifferenzen Δp₁, Δp₂, Δp₃, Δp₄ für diese beiden ABS-Steuerventile 11, 12, 13, 14 ergeben.

Wenn auch die Korrektur-Ansteuerzeiten Δt^{korr}_{EV}.i, Δt^{korr}_{AV}.i die jeweilig zugeordneten Mindest-Ansteuerzeiten Δt^{mm}_{EV}.i, Δt^{min}_{AV}.i unterschreiten, werden die Korrektur-Ansteuerzeiten Δt^{min}_{EV}.i, Δt^{korr}_{AV}.i entsprechend auf die Mindest-Ansteuerzeiten Δt^{min}_{EV}.i, Δt^{min}_{AV}.i angehoben. Anschließend findet eine Aussteuerung lediglich der den Korrektur-Ansteuerzeiten Δt^{korr}_{EV}.i, Δt^{korr}_{AV}.i entsprechenden Druckdifferenzen Δp₁, Δp₂, Δp₃, Δp₄ an den jeweiligen Rädern 1, 2, 3, 4 statt.

Gemäß einer alternativen Ausführungsform wird in dem Fall, dass alle Ansteuerzeiten Δt_{EV}.i, Δt_{AV}.i die jeweilig zugeordnete Mindest-Ansteuerzeit Δt^{min}_{EV}.i, Δt^{min}_{AV}.i unterschreiten, zunächst ermittelt, für welches ABS-Steuerventil 11, 12, 13, 14 eine Ansteuerzeit Δt_{EV}.i, Δt_{AV}.i berechnet wurde, die am weitesten von der diesem ABS-Steuerventil 11, 12, 13, 14 zugeordneten Mindest-Ansteuerzeit Δt^{min}_{EV}.i, Δt^{min}_{AV}.i abweicht. Anschließend wird für alle verbliebenen, d. h. für alle außer diesem einen ABS-Steuerventil 11, 12, 13, 14 mit der ermittelten größten Abweichung, eine Neuberechnung von Korrektur-Ansteuerzeiten Δt^{korr}_{EV}.i, Δt^{korr}_{AV}.i durchgeführt. Falls bei dieser Neuberechnung von Korrektur-Ansteuerzeiten Δt^{korr}_{EV}.i, Δt^{korr}_{AV}.i für die verbliebenen ABS-Steuerventile 11, 12, 13, 14 wiederum für ein ABS-Steuerventil 11, 12, 13, 14 eine Korrektur-Ansteuerzeit Δt^{korr}_{EV}.i, Δt^{korr}_{AV}.i bestimmt wurde, die kleiner als der diesem ABS-Steuerventil 11, 12, 13, 14 zugeordneten Mindest-Ansteuerzeit Δt^{min}_{EV}.i, Δt^{min}_{AV}.i ist, wird eine weitere Neuberechnung ohne Berücksichtigung dieses ABS-Steuerventils 11, 12, 13, 14, das am weitesten abweicht, durchgeführt. Diese Art der Neuberechnung erfolgt bis zu dem Zeitpunkt, bis auch für das letzte der für eine Regelung zur Verfügung stehenden ABS-Steuerventile 11, 12, 13, 14 immer noch eine Ansteuerzeit Δt_{EV}.i, Δt_{AV}.i kleiner der diesem Drucksteuerventil 11, 12, 13, 14 zugeordneten Mindest-Ansteuerzeit Δt^{min}_{EV}.i, Δt^{mm}_{AV}.i berechnet wird. In diesem Fall wird die Korrektur-Ansteuerzeit Δt^{korr}_{EV}.i, Δt^{korr}_{AV}.i für dieses letzte Drucksteuerventil 11, 12, 13, 14 auf die dem Drucksteuerventil 11, 12, 13, 14 zugeordnete Mindest-Ansteuerzeit Δt^{min}_{EV}.i, Δt^{min}_{AV}.i angehoben und lediglich dieses Drucksteuerventil 11, 12, 13, 14 zum Abbremsen verwendet.

Die Berechnungen der jeweiligen Ansteuerzeiten Δt_{EV}.i, Δt_{AV}.i sowie der Korrektur-Ansteuerzeiten Δt^{korr}_{EV}.i, Δt^{korr}_{AV}.i, d. h. die Durchführung des Verfahrens, findet hierbei auf der Steuereinrichtung 10 statt, wobei die Berechnungen auch ausgelagert werden können. Für die Berechnung kann eine entsprechende Software auf der Steuereinrichtung 10 vorgesehen sein.

Zum Aussteuern der Druckdifferenzen Δp₁, Δp₂, Δp₃, Δp₄ wird durch die Steuereinrichtung 10 zunächst ein 3/2-Wegeventil 21 für die Radbremsen 7, 8 der Vorderachse VA bzw. ein 3/2-Wegeventil 22 für die Radbremsen 5, 6 der Hinterachse HA angesteuert, die an einen weiteren Druckvorratsbehälter 9.3 angeschlossen sind. Die 3/2-Wegeventile 21, 22 sind jeweils über ein Rückschlagventil 23, 24 mit einem Relaisventil 25, 26 für die jeweilige Fahrzeugachse VA, HA verbunden. Bei entsprechender Ansteuerung der 3/2-Wegeventile 21, 22 kann dadurch ein ggf. durch das Bremsventil 30 bereitgestellter Druck erhöht werden, indem die Verbindung zwischen den Druckvorratsbehältern 9.1, 9.2 und den ABS-Steuerventilen 11, 12, 13, 14 über die Relaisventile 25, 26 freigegeben wird. Somit kann über die ABS-Steuerventile 11, 12, 13, 14 an den vorderen und/oder hinteren Radbremsen 5, 6, 7, 8 ein Bremsdruck p₁, p₂, p₃, p₄ auch erhöht werden, um eine angeforderte Druckdifferenz Δp₁, Δp₂, Δp₃, Δp₄ in Richtung einer Erhöhung des Bremsdrucks p₁, p₂, p₃, p₄ zu erfüllen. Ebenso kann über die ABS-Steuerventile 11, 12, 13, 14 an den vorderen oder hinteren Radbremsen 5, 6, 7, 8 ein Bremsdruck p₁, p₂, p₃, p₄ auch unter einen ggf. durch das Bremsventil 30 bereitgestellten Druck verringert werden, um eine angeforderte Druckdifferenz Δp₁, Δp₂, Δp₃, Δp₄ in Richtung einer Verringerung des Bremsdrucks p₁, p₂, p₃, p₄ zu erfüllen und somit das Regelziel, d. h. z_{Soll} und ds_{Soll} zu erreichen.

Unterschreiten nicht alle berechneten Ansteuerzeiten Δt_{EV}.i, Δt_{AV}.i die jeweilig zugeordnete Mindest-Ansteuerzeit Δt^{min}_{EV}.i, Δt^{min}_{AV}.i, werden für all diejenigen ABS-Steuerventile 11, 12, 13, 14 korrigierte Ansteuerzeiten Δt^{korr}_{EV}.i, Δt^{korr}_{AV}.i berechnet, die die Mindest-Ansteuerzeit Δt^{min}_{EV}.i, Δt^{min}_{AV}.i überschreiten oder dieser entsprechen, so dass die Fahrzeug-Soll-Verzögerung z_{Soll} hauptsächlich mit den ABS-Steuerventilen 11, 12, 13, 14 durchgesetzt wird, für die ohnehin bereits eine zulässige Ansteuerzeit Δt_{EV}.i, Δt_{AV}.i berechnet wurde. Es findet somit für diese ABS-Steuerventile 11, 12, 13, 14 lediglich eine Neuberechnung statt, um die Fahrzeug-Ist-Verzögerung aufgrund der wegfallenden ABS-Steuerventile 11, 12, 13, 14 zu kompensieren.

Gemäß einer alternativen Ausführungsform, bei der immer eine achsweise Ansteuerung erfolgt, findet die folgende Fallunterscheidung statt: Unterschreiten alle berechneten Ansteuerzeiten Δt_{EV}.i, Δt_{AV}.i die jeweilige Mindest-Ansteuerzeit Δt^{min}_{EV}.i, Δt^{min}_{AV}.i wird zunächst eine Summen-Ansteuerzeit At^{VA}_{Sum,} Δt^{HA1}_{sum,} Δt^{HA2}_{Sum} aus den Ansteuerzeiten Δt_{EV}.i, Δt_{AV}.i der ABS-Steuerventile 11, 12, 13, 14 einer Fahrzeugachse VA, HA1, HA2 gebildet. Bei einer achsweisen Ansteuerung werden anschließend für diejenigen ABS-Steuerventile 11, 12, 13, 14 Korrektur-Ansteuerzeiten Δt^{korr}_{EV}.i, Δt^{korr}_{AV}.i berechnet, die an der Fahrzeugachse VA, HA1, HA2 mit der höchsten Summen-Ansteuerzeit Δt^{VA}_{Sum,} Δt^{HA1}_{Sum,} Δt^{HA2}Sᵤₘ liegen.

Falls nicht alle berechneten Ansteuerzeiten Δt_{EV}.i, Δt_{AV.}i die jeweilige Mindest-Ansteuerzeit Δt^{min}_{EV}.i, Δt^{min}_{AV}.i unterschreiten, wird weiter unterschieden: Ist eine (oder mehrere) Fahrzeugachse VA, HA1, HA2 vorhanden, für die an allen Rädern 1, 2, 3, 4 Ansteuerzeiten Δt_{EV}.i, Δt_{AV}.i berechnet wurden, die oberhalb der jeweiligen Mindest-Ansteuerzeit liegen, so werden lediglich für diese ABS-Steuerventile 11, 12, 13, 14 dieser Fahrzeugachse(n) VA, HA1, HA2 Korrektur-Ansteuerzeiten Δt^{korr}_{EV}.i, Δt^{korr}_{AV}.i berechnet.

Überschreitet an jeder Fahrzeugachse VA, HA1, HA2 lediglich an einem Rad 1, 2, 3, 4 die berechnete Ansteuerzeit Δt_{EV}.i, Δt_{AV}.i die Mindest-Ansteuerzeit Δt^{min}_{EV}.i, Δt^{min}_{AV}.i, wird zunächst eine Summen-Ansteuerzeit Δt^{VA}_{Sum,} Δt^{HA1}_{Sum,} Δt^{HA2}_{Sum} aus den Ansteuerzeiten Δt_{EV}.i, Δt_{AV}.i der ABS-Steuerventile 11, 12, 13, 14 einer jeden Fahrzeugachse VA, HA1, HA2 gebildet. Bei einer achsweisen Ansteuerung werden anschließend für diejenigen ABS-Steuerventile 11, 12, 13, 14 Korrektur-Ansteuerzeiten Δt^{korr}_{EV}.i, Δt^{korr}_{AV}.i berechnet, die an der Fahrzeugachse VA, HA1, HA2 mit der höchsten Summen-Ansteuerzeit Δt^{VA}_{Sum,} Δt^{HA1}_{Sum,} Δt^{HA2}_{Sum} liegen.

Zur Ansteuerung der ABS-Steuerventile 11, 12, 13, 14 mit den entsprechenden Ansteuerzeiten Δt_{EV}.i, Δt_{AV}.i bzw. Korrektur-Ansteuerzeiten Δt^{korr}_{EV}.i, Δt^{korr}_{AV}.i über mehrere Taktzyklen z.i, beispielsweise bei dem in Fig. 2 gezeigten rampenförmigen Verlauf V der Fahrzeug-Soll-Verzögerung z_{Soll}, ist vorgesehen, zwischen jedem Taktzyklus z.i eine Wartezeit t_{w} abzuwarten, bevor die Ansteuerzeiten Δt_{EV}.i, Δt_{AV}.i bzw. die Korrektur-Ansteuerzeiten Δt^{min}_{EV}.i, Δt^{korr}_{AV}.i für den nächsten Taktzyklus z.i aus der auf der Rampe liegenden Fahrzeug-Soll-Verzögerung z_{Soll} bestimmt und die ABS-Steuerventile 11, 12, 13, 14 entsprechend angesteuert werden. Die Wartezeit t_{w} beträgt hierbei ca. 250ms, innerhalb derer abgewartet wird, bis das Fahrzeug 100 auf die Bremsung des vorherigen Taktzyklus z.i tatsächlich reagiert hat.

Gemäß einer Ausführungsform ist eine variable Wartezeit Δt_{w} vorgesehen, wobei zunächst eine Mindest-Wartezeit t^{min}_{w} gewartet wird, die beispielsweise 250ms beträgt. Wird nach dieser Mindest-Wartezeit t^{min}_{w} festgestellt, dass die Korrektur-Ansteuerzeit Δt^{korr}_{EV}.i, Δt^{korr}_{AV}.i für das letzte für eine Regelung zur Verfügung stehende ABS-Steuerventil 11, 12, 13, 14 - radweise oder achsweise - die Mindest-Ansteuerzeit Δt^{min}_{EV}.i, Δt^{min}_{AV}.i für dieses ABS-Steuerventil 11, 12, 13, 14 unterschreitet, findet zunächst keine Ansteuerung der ABS-Steuerventile 11, 12, 13, 14 statt, d. h. die Δt^{korr}_{EV}.i, Δt^{korr}_{AV}.i dieses ABS-Steuerventils 11, 12, 13, 14 wird auch nicht auf die Mindest-Ansteuerzeit Δt^{mm}_{EV}.i, Δt^{min}_{AV}.i angehoben. Vielmehr wird nach einem Zeitintervall t_{Int} von beispielsweise 10ms für dieses ABS-Steuerventil 11, 12, 13, 14 eine neue Korrektur-Ansteuerzeit Δt^{korr}_{EV}.i, Δt^{korr}_{AV}.i in Abhängigkeit der sich mit der Zeit rampenförmig veränderten Fahrzeug-Soll-Verzögerung z_{Soll} ermittelt. D.h. nach t_{Int} = 10ms liegt eine höhere Fahrzeug-Soll-Verzögerung z_{Soll} vor, der auch eine höhere Korrektur-Ansteuerzeit Δt^{korr}_{EV}.i, Δt^{korr}_{AV}.i entspricht. Ist auch diese Korrektur-Ansteuerzeit Δt^{korr}_{EV}.i, Δt^{korr}_{AV}.i kleiner als die jeweilige Mindest-Ansteuerzeit Δt^{min}_{EV}.i, Δt^{min}_{AV}.i wird nach dem Zeitintervall t_{Int}, d.h. nach weiteren 10ms erneut neuberechnet. Diese Neuberechnung findet so lange statt, bis die Korrektur-Ansteuerzeit Δt^{korr}_{EV}.i, Δt^{korr}_{AV}.i größer oder gleich der jeweiligen Mindest-Ansteuerzeit Δt^{min}_{EV}.i, Δt^{min}_{AV}.i ist.

Dies ist beispielhaft in Fig. 2 für den zweiten Taktzyklus z.2 dargestellt, wonach nach der Mindest-Wartezeit t^{min}_{w} drei Zeitintervalle t_{Int} gewartet wird bevor für den zweiten Taktzyklus z.2 die korrigierte Ansteuerzeit Δt^{korr}_{EV}.i, Δt^{korr}_{AV}.i ermittelt und ausgesteuert wird. D.h. z_{Soll} wird erst nach einer variablen Wartezeit Δt_{w} = t^{min}_{w} + 3 x t_{Int} bestimmt, nach der Δt^{korr}_{EV}.i, Δt^{korr}_{AV}.i > Δt^{min}_{EV}.i, Δt^{min}_{AV}.i festgestellt wird. Anschließend wird zum Berechnen des dritten Taktzyklus z.3 wieder die Mindest-Wartezeit t^{min}_{w} abgewartet.

Wurde beispielsweise im dritten Taktzyklus z.3 eine korrigierte Ansteuerzeit Δt^{min}_{EV}.i, Δt^{korr}_{AV}.i; i=1, 2 für die Räder 1, 2 der ersten Hinterachse HA1 zu Beginn des dritten Taktzyklus z.3 berechnet, die beispielsweise jeweils 25ms beträgt, kann zusätzlich die Stufbarkeit verbessert werden, indem die Ansteuerung dieser korrigierten Ansteuerzeit Δt^{korr}_{EV}.i, Δt^{korr}_{AV}.i in drei aufeinanderfolgenden Taktintervalle z.31, z.32, z.33 (s. Fig. 2) unterteilt wird, die jeweils 11ms lang sind, wobei eine Totzeit eines ABS-Steuerventils 11, 12, 13, 14 von 4ms und eine Mindest-Ansteuerzeit Δt^{min}_{EV}.i, Δt^{min}_{AV}.i, von beispielsweise 6ms zugrunde gelegt ist, so dass eine Abbremsung in mehreren kleineren Stufen statt in einer großen Stufe erfolgt, was vom Fahrer als angenehmer empfunden wird.

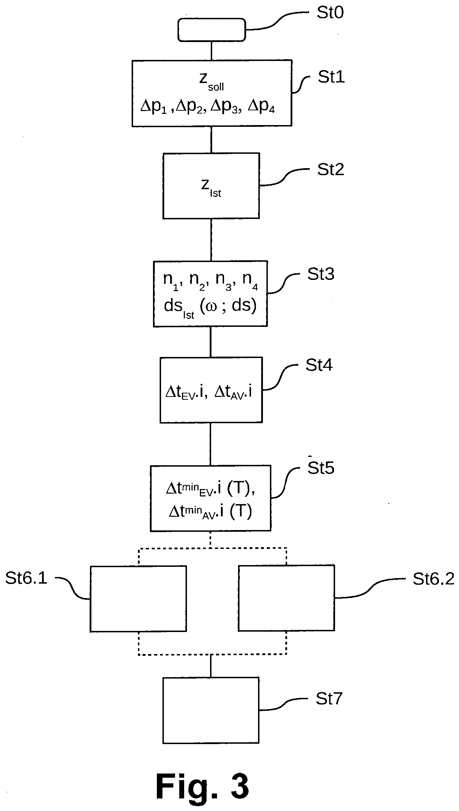

Das erfindungsgemäße Verfahren kann, wie Fig. 3 zeigt, somit beispielsweise folgendermaßen ablaufen:
In einem anfänglichen Schritt St0 wird das Verfahren gestartet, beispielsweise mit dem Einleiten einer Bremsung. In einem ersten Schritt St1 wird die Fahrzeug-Soll-Verzögerung z_{Soll} erfasst, wobei diese vom Fahrer und/oder dem Fahrerassistenzsystem vorgegeben wird, beispielsweise auch in Form von auszusteuernden Druckdifferenzen Δp₁, Δp₂, Δp₃, Δp₄. Die Fahrzeug-Soll-Verzögerung z_{Soll} kann hierbei für verschiedene Taktzyklen z.i auch aus einem rampenförmigen Verlauf V folgen. In einem zweiten Schritt St2 wird eine Fahrzeug-Ist-Verzögerung z_{Ist} ermittelt, beispielsweise mittels eines Beschleunigungs-Sensors 36 und/oder auf Basis von Messsignalen der Raddrehzahlsensoren 1.1, 1.2, 1.3, 1.4. In einem dritten Schritt St3 wird ein Ist-Raddrehverhalten ds_{Ist} bestimmt, das den Unterschied im Bremsschlupf ds oder in der Winkelgeschwindigkeit ω zwischen Rädern 1, 2, 3, 4 unterschiedlicher Fahrzeugachsen VA, HA1, HA2 angibt, d. h. wie stark eine erste Fahrzeugachse VA zu einer weiteren Fahrzeugachse HA1, HA2 überbremst oder unterbremst ist, wobei dies anhand der von den Raddrehzahlsensoren 1.1, 1.2, 1.3, 1.4 ermittelten Raddrehzahlen n₁, n₂, n₃, n₄ ermittelt wird. Hierbei können auch mehrere Ist-Raddrehverhalten ds_{Ist} betrachtet werden, beispielsweise zwischen der Vorderachse VA und der ersten Hinterachse HA1 sowie unabhängig davon zwischen der Vorderachse VA und der zweiten Hinterachse HA2.

In einem vierten Schritt St4 werden zu den auszusteuernden Druckdifferenzen Δp₁, Δp₂, Δp₃, Δp₄ Ansteuerzeiten Δt_{EV}.i, Δt_{AV}.i berechnet, die den Einlassventilen 15.i bzw. Auslassventilen 16.i der jeweiligen ABS-Steuerventile 11, 12, 13, 14 zugeordnet sind. In einem fünften Schritt St5 werden diese Ansteuerzeiten Δt_{EV}.i, Δt_{AV}.i mit dem jeweiligen ABS-Steuerventil 11, 12, 13, 14 zugeordneten Mindest-Ansteuerzeiten Δt^{min}_{EV}.i, Δt^{min}_{AV}.i verglichen. Wird festgestellt, dass alle oder einzelne Ansteuerzeiten Δt_{EV}.i, Δt_{AV}.i die jeweiligen Mindest-Ansteuerzeiten Δt^{min}_{EV}.i, Δt^{min}_{AV}.i unterschreiten, werden korrigierte Ansteuerzeiten Δt^{korr}_{EV}.i, Δt^{korr}_{AV}.i ermittelt, wobei diese für eine zweite Anzahl A2 an ABS-Steuerventilen 11, 12, 13, 14 ermittelt werden, die geringer ist als die erste Anzahl A1 an Drucksteuerventilen 11, 12, 13, 14.

Falls die Korrektur-Ansteuerzeiten Δt^{korr}_{EV}.i, Δt^{korr}_{AV}.i die jeweiligen Mindest-Ansteuerzeiten Δt^{min}_{EV}.i, Δt^{min}_{AV}.i weiterhin unterschreiten werden gemäß einer Ausführungsform im Schritt St6.1 die Korrektur-Ansteuerzeiten Δt^{koor} _{EV}.i, Δt^{korr}_{AV}.i auf die Mindest-Ansteuerzeiten Δt^{min}_{EV}.i, Δt^{mm}_{Av}.i angehoben. In einem alternativen Schritt St6.2 wird stattdessen ein oder mehrere Zeitintervalle t_{Int} gewartet, bis die Fahrzeug-Soll-Verzögerung z_{Soll} auf dem rampenförmigen Verlauf V derartig angestiegen ist, bis die Korrektur-Ansteuerzeiten Δt^{kon}_{EV}.i, Δt^{korr}_{AV}.i die Mindest-Ansteuerzeiten Δt^{min}_{EV}.i, Δt^{min}_{AV}.i überschreiten.

In einem abschließenden siebenten Schritt St7, werden die jeweiligen ABS-Steuerventile 11, 12, 13, 14 angesteuert, für die eine korrigierte Ansteuerzeit Δt^{min}_{EV}.i, Δt^{korr}_{AV}.i berechnet wurde.

### Bezugszeichenliste (Bestandteil der Beschreibung)

- 1,2: Hinterräder
- 3,4: Vorderräder
- 1.1, 1.2, 1.3, 1.4: Raddrehzahlsensoren
- 5, 6: hintere Radbremsen
- 7, 8: vordere Radbremsen
- 9.1, 9.2, 9.3: Druckvorratsbehälter
- 10: Steuereinrichtung
- 11, 12, 13, 14: ABS-Steuerventile/Drucksteuerventile
- 15.i: Einlassventile
- 16.i: Auslassventile
- 21,22: 3/2-Wegeventil
- 23, 24: Rückschlagventil
- 25, 26: Relaisventil
- 30: Bremsventil
- 36: Beschleunigungs-Sensor
- 100: Fahrzeug
- 101: Steuergerät (extern)
- 200: Bremssystem

- A1: erste Anzahl
- A2: zweite Anzahl
- BS₁, BS₂, BS₃, BS₄: radweiser Bremsschlupf
- ds: Differenzschlupf
- ds_{Ist}: Ist-Raddrehverhalten
- ds_{Soll}: Soll-Raddrehverhalten
- Δp₁, Δp₂, Δp₃, Δp₄: Differenzdruck
- Δt_{EV}.i, Δt_{AV}.i: EV-/AV-Ansteuerzeit
- Δt^{min}_{EV}.i, Δt^{korr}_{AV}.i: Korrektur-EV-/AV-Ansteuerzeit
- Δt^{min}_{EV}.i, Δt^{min}_{AV}.i: EV-/AV-Mindest-Ansteuerzeit
- Δt^{VA}_{Sum}, Δt^{HA1}_{Sum}, Δt^{HA2}Sᵤₘ: Summen-Ansteuerzeit einer Fahrzeugachse
- HA1, HA2: erste, zweite Hinterachse
- n₁, n₂, n₃, n₄: Raddrehzahlen
- p₁, p₂, p₃, p₄: Bremsdruck
- t: Zeit
- t_{Int}: Zeitintervall
- t_{w}: Wartezeit
- Δ t_{w}: variable Wartezeit
- t^{min}_{w}: Mindest-Wartezeit
- T: Temperatur
- V: (rampenförmiger) Verlauf
- VA: Vorderachse
- ω: Winkelgeschwindigkeit
- z.i: Taktzyklus
- z.ij: Taktintervall
- z_{Soll}: Fahrzeug-Soll-Verzögerung
- z_{Ist}: Fahrzeug-Ist-Verzögerung

## Patentansprüche

1. Verfahren zum Regeln einer Fahrzeug-Ist-Verzögerung (z_{Ist}) in einem Fahrzeug (100), insbesondere Nutzfahrzeug, mit einem ABS-Bremssystem (200) mit mindestens den folgenden Schritten:
- Erfassen der Fahrzeug-Ist-Verzögerung (z_{Ist});
- Ermitteln einer Fahrzeug-Soll-Verzögerung (z_{Soll});
- Erfassen mindestens eines Ist-Raddrehverhaltens (ds_{Ist}), wobei das Ist-Raddrehverhalten (ds_{Ist}) einen Unterschied im Drehverhalten (BS₁, BS₂, BS₃, BS₄, ω) von Rädern (1, 2) einer ersten Fahrzeugachse (VA) zu Rädern (3, 4) einer weiteren Fahrzeugachse (HA1, HA2) angibt;
- Berechnen von Ansteuerzeiten (Δt_{EV}.i, Δt_{AV}.i; i=1,...,4) zum Ansteuern von den Rädern (1, 2, 3, 4) zugeordneten Drucksteuerventilen (11, 12, 13, 14, 15.i, 16.i; i=1,...,4) des ABS-Bremssystems (200),
wobei die jeweiligen Ansteuerzeiten (Δt_{EV}.i, Δt_{AV}.i) angeben, wie lange das jeweilige Drucksteuerventil (11, 12, 13, 14, 15.i, 16.i) anzusteuern ist, um die Fahrzeug-Ist-Verzögerung (z_{Ist}) an die Fahrzeug-Soll-Verzögerung (z_{Soll}) sowie das mindestens eine Ist-Radrehverhalten (ds_{Ist}) an ein jeweiliges Soll-Raddrehverhalten (ds_{Soll}) anzupassen; und
- Ermitteln von Korrektur-Ansteuerzeiten (Δt^{korr}_{EV}.i, Δt^{korr}_{AV}.i), falls mindestens eine der berechneten Ansteuerzeiten (Δt_{EV}.i, Δt_{AV}.i) eine dem jeweiligen Drucksteuerventil (11, 12, 13, 14, 15.i, 16.i) zugeordnete Mindest-Ansteuerzeit (Δt^{min}_{EV}.i, Δt^{mm}_{AV}.i) unterschreitet;
**dadurch gekennzeichnet, dass**
das Berechnen der Ansteuerzeiten (Δt_{EV}.i, Δt_{AV}.i) zumindest für all diejenigen Drucksteuerventile (11, 12, 13, 14, 15.i, 16.i) stattfindet, denen Räder (1, 2, 3, 4) zugeordnet sind, aus deren Drehverhalten (BS₁, BS₂, BS₃, BS₄, ω) das mindestens eine Ist-Raddrehverhalten (ds_{Ist}) folgt, wobei dies einer ersten Anzahl (A1) an Drucksteuerventilen (11, 12, 13, 14, 15.i, 16.i) entspricht, und
bei einem Unterschreiten mindestens einer Mindest-Ansteuerzeit (Δt^{min}_{EV}.i, Δt^{min}_{AV}.i) Korrektur-Ansteuerzeiten (Δt^{korr}_{EV}.i, Δt^{korr}_{AV}.i) für eine zweite Anzahl (A2) an Drucksteuerventilen (11, 12, 13, 14, 15.i, 16.i) berechnet wird, wobei die zweite Anzahl (A2) geringer ist als die erste Anzahl (A1), und zum Bewirken der Fahrzeug-Soll-Verzögerung (z_{Soll}) ein Ansteuern lediglich der Drucksteuerventile (11, 12, 13, 14, 15.i, 16.i) erfolgt, denen eine Korrektur-Ansteuerzeit (Δt^{korr}_{EV}.i, Δt^{korr}_{AV}.i) zugeordnet ist,
so dass durch die Korrektur-Ansteuerzeiten (Δt^{korr}_{EV}.i, Δt^{korr}_{AV}.i) die aufgrund des Unterschreitens mindestens einer Mindest-Ansteuerzeit (Δt^{min}_{EV}.i, Δt^{min}_{AV}.i) geringere Anzahl (A1-A2) an angesteuerten Drucksteuerventilen (11, 12, 13, 14, 15.i, 16.i) kompensiert wird.

2. Verfahren nach Anspruch 1, **dadurch gekennzeichnet, dass** die zweite Anzahl (A2) an Drucksteuerventilen (11, 12, 13, 14, 15.i, 16.i) eine echte Teilmenge der ersten Anzahl (A1) an Drucksteuerventilen (11, 12, 13, 14, 15.i, 16.i) ist.

3. Verfahren nach Anspruch 1 oder 2, **dadurch gekennzeichnet, dass** die Fahrzeug-Soll-Verzögerung (z_{Soll}) aus einem rampenförmigen Verlauf (V) über die Zeit (t) ermittelt wird,
wobei der rampenförmige Verlauf (V) in mehrere Taktzyklen (z.i) eingeteilt ist und jedem Taktzyklus (z.i) eine auf der Rampe (V) liegende Fahrzeug-Soll-Verzögerung (z_{Soll}) zugeordnet ist, die der Berechnung der Ansteuerzeiten (Δt_{EV}.i, Δt_{AV}.i) zum jeweiligen Zeitpunkt (t) zugrunde gelegt wird,
wobei zwischen jedem Taktzyklus (z.i) eine Wartezeit (t_{w}) abgewartet wird.

4. Verfahren nach einem der vorhergehenden Ansprüche, **dadurch gekennzeichnet, dass** für den Fall, dass die Ansteuerzeiten (Δt_{EV}.i, Δt_{AV}.i) aller Drucksteuerventile (11, 12, 13, 14, 15.i, 16.i), denen Räder (1, 2, 3, 4) zugeordnet sind, aus deren Drehverhalten (BS₁, BS₂, BS₃, BS₄, ω) das mindestens eine Ist-Raddrehverhalten (ds_{Ist}) bestimmt wird, die Mindest-Ansteuerzeit (Δt^{min}_{EV}.i, Δt^{min}_{AV}.i) unterschreiten, eine Korrektur-Ansteuerzeit (Δt^{kori}_{EV}.i, Δt^{korr}_{AV}.i) zumindest oder lediglich für das Drucksteuerventil (11, 12, 13, 14, 15.i, 16.i) berechnet wird, dessen berechnete Ansteuerzeit (Δt_{EV}.i, Δt_{AV}.i) am nächsten an der jeweiligen Mindest-Ansteuerzeit (Δt^{min}_{EV}.i, Δt^{min}_{AV}.i) liegt.

5. Verfahren nach einem der Ansprüche 1 bis 3, **dadurch gekennzeichnet, dass** für den Fall, dass die Ansteuerzeiten (Δt_{EV}.i, Δt_{AV}.i) aller Drucksteuerventile (11, 12, 13, 14, 15.i, 16.i), denen Räder (1, 2, 3, 4) zugeordnet sind, aus deren Drehverhalten (BS₁, BS₂, BS₃, BS₄, ω) das mindestens eine Ist-Raddrehverhalten (ds_{Ist}) bestimmt wird, die Mindest-Ansteuerzeit (Δt^{min}_{EV}.i, Δt^{min}_{AV}.i) unterschreiten, eine Korrektur-Ansteuerzeit (Δt^{korr}_{EV}.i, Δt^{korr}_{AV}.i) für das Drucksteuerventil (11, 12, 13, 14, 15.i, 16.i) nicht berechnet wird, für das die Ansteuerzeit (Δt_{EV}.i, Δt_{AV}.i) am weitesten von der diesem Drucksteuerventil (11, 12, 13, 14, 15.i, 16.i) zugeordneten Mindest-Ansteuerzeit (Δt^{min}_{EV}.i, Δt^{min}_{AV}.i) abweicht und für alle anderen Drucksteuerventile (11, 12, 13, 14, 15.i, 16.i) eine erneute Berechnung von Korrektur-Ansteuerzeiten (Δt^{korr}_{EV}.i, Δt^{korr}_{AV}.i) stattfindet, wobei für den Fall, dass auch mindestens eine der erneut berechneten Korrektur-Ansteuerzeiten (Δt^{korr}_{EV}.i, Δt^{korr}_{AV}.i) die jeweilige Mindest-Ansteuerzeit (Δt^{min}_{EV}.i, Δt^{min}_{AV}.i) unterschreitet sukzessive eine Neuberechnung ohne die jeweilige von der Mindest-Ansteuerzeit (Δt^{min}_{EV}.i, Δt^{min}_{AV}.i) am weitesten abweichenden Korrektur-Ansteuerzeit (Δt^{korr}_{EV}.i, Δt^{korr}_{AV}.i) stattfindet.

6. Verfahren nach einem der vorhergehenden Ansprüche **dadurch gekennzeichnet, dass** für den Fall, dass auch die Korrektur-Ansteuerzeit (Δt^{korr}_{EV}.i, Δt^{korr}_{AV}.i) die Mindest-Ansteuerzeit (Δt^{min}_{EV}-i, Δt^{min}_{AV}.i) unterschreitet, diejenige Korrektur-Ansteuerzeit (Δt^{korr}_{EV}.i, Δt^{korr}_{AV}.i) auf die jeweilige Mindest-Ansteuerzeit (Δt^{min}_{EV.}i, Δt^{min}_{AV}.i) gesetzt wird.

7. Verfahren nach einem der Ansprüche 1 bis 5, **dadurch gekennzeichnet, dass** für den Fall, dass auch die Korrektur-Ansteuerzeit (Δt^{korr}_{EV}.i, Δt^{korr}_{AV}.i) für das letzte für eine Regelung zur Verfügung stehende Drucksteuerventil (11, 12, 13, 14, 15.i, 16.i) die jeweilige Mindest-Ansteuerzeit (Δt^{min}_{EV}.i, Δt^{min}_{AV}.i) unterschreitet, eine Ansteuerung der Drucksteuerventile (11, 21, 13, 14) erst dann stattfindet, wenn aufgrund einer variablen Wartezeit (Δt_{w}) zwischen zwei Taktzyklen (z.i) eine Korrektur-Ansteuerzeit (Δt^{korr}_{EV}.i, Δt^{korr}_{AV}.i) für das letzte für eine Regelung zur Verfügung stehende Drucksteuerventil (11, 12, 13, 14, 15.i, 16.i) ermittelt wurde, die größer oder gleich der jeweilige Mindest-Ansteuerzeit (Δt^{min}_{EV}.i, Δt^{min}_{AV}.i) ist,
wobei die variable Wartezeit (Δt_{w}) in eine Mindest-Wartezeit (t^{min}_{w}) und mindestens ein Zeitintervall (t_{Int}) aufgeteilt ist.

8. Verfahren nach einem der Ansprüche 1 bis 3, **dadurch gekennzeichnet, dass** für den Fall, dass die Ansteuerzeiten (Δt_{EV}.i, Δt_{AV}.i) zumindest eines Drucksteuerventils (11, 12, 13, 14, 15.i, 16.i), dem Räder (1, 2, 3, 4) zugeordnet sind, aus deren Drehverhalten (BS₁, BS₂, BS₃, BS₄, ω) das mindestens eine Ist-Raddrehverhalten (ds_{Ist}) bestimmt wird, die Mindest-Ansteuerzeit (Δt^{min}_{EV}.i, Δt^{min}_{AV}.i) überschreitet, zumindest oder lediglich eine Korrektur-Ansteuerzeit (Δt^{korr}_{EV}.i, Δt^{korr}_{AV}.i) für diese, die Mindest-Ansteuerzeit (Δt^{min}_{EV}.i, Δt^{min}_{AV}.i) überschreitende Drucksteuerventile (11, 12, 13, 14, 15.i, 16.i) berechnet wird.

9. Verfahren nach einem der vorhergehenden Ansprüche, **dadurch gekennzeichnet, dass** eine achsweise Ansteuerung der Drucksteuerventile (11, 12, 13, 14, 15.i, 16.i) derartig stattfindet, dass eine Summen-Ansteuerzeit (t^{VA}_{Sum}, Δt^{HA1}_{Sum}, Δt^{HA2}_{Sum}) aus allen Ansteuerzeiten (Δt_{EV}.i, Δt_{AV}.i) der jeweiligen Fahrzeugachse (VA, HA1, HA2) berechnet wird und lediglich für diejenigen Drucksteuerventile (11, 12, 13, 14) eine Korrektur-Ansteuerzeit (Δt^{korr}_{EV}.i, Δt^{korr}_{AV}.i ) berechnet wird, die der Fahrzeugachse (VA, HA1, HA2) mit der höchsten Summen-Ansteuerzeit (t^{VA}_{Sum}, Δt^{HA1}_{Sum}, Δt^{HA2}_{Sum}) zugeordnet ist.

10. Verfahren nach einem der Ansprüche 1 bis 3, **dadurch gekennzeichnet, dass** für den Fall, dass die Ansteuerzeiten (Δt_{EV}.i, Δt_{AV}.i) aller Drucksteuerventile (11, 12, 13, 14, 15.i, 16.i), denen Räder (1, 2, 3, 4) zugeordnet sind, aus deren Drehverhalten (BS₁, BS₂, BS₃, BS₄, ω) das mindestens eine Ist-Raddrehverhalten (ds_{Ist}) bestimmt wird, die Mindest-Ansteuerzeit (Δt^{min}_{EV}.i, Δt^{min}_{AV}.i) überschreiten, keine Korrektur-Ansteuerzeiten (Δt^{korr}_{EV}.i, Δt^{korr}_{AV}.i) berechnet werden, und eine Ansteuerung der Drucksteuerventile (11, 12, 13, 14, 15.i, 16.i) mit den jeweiligen ursprünglich berechneten Ansteuerzeiten (Δt_{EV}.i, Δt_{AV}.i) stattfindet.

11. Verfahren nach einem der vorhergehenden Ansprüche, **dadurch gekennzeichnet, dass** die Ansteuerzeiten (Δt_{EV}.i, Δt_{AV}.i) für Drucksteuerventile an allen abbremsbaren Rädern (1, 2, 3, 4) des Fahrzeuges (100) berechnet werden.

12. Verfahren nach einem der vorhergehenden Ansprüche, **dadurch gekennzeichnet, dass** zum Berechnen der Ansteuerzeiten (Δt_{EV}.i, Δt_{AV}.i) sowie der Korrektur-Ansteuerzeiten (Δt^{korr}_{EV}.i, Δt^{korr}_{AV}.i) für ein jeweiliges Drucksteuerventil (11, 12, 13, 14) jeweils eine Einlassventil-Ansteuerzeit (Δt_{EV}.i) bzw. eine Korrektur-Einlassventil-Ansteuerzeit (Δt^{korr}_{EV}.i) für ein Einlassventil (15.i) des jeweiligen Drucksteuerventils (11, 12, 13, 14) sowie eine Auslassventil-Ansteuerzeit (Δt_{AV}.i) bzw. eine Korrektur-Auslassventil-Ansteuerzeit (Δt^{korr}_{AV}.i) für ein Auslassventil (15.i) des jeweiligen Drucksteuerventils (11, 12, 13, 14) betrachtet wird, wobei jedem Einlassventil (15.i) und jedem Auslassventil (16.i) jeweils eine Einlassventil-Mindest-Ansteuerzeit (Δt^{min}_{EV}) bzw. eine Auslassventil-Mindest-Ansteuerzeit (Δt^{min}_{AV}.i) zugeordnet ist.

13. Verfahren nach einem der vorhergehenden Ansprüche, **dadurch gekennzeichnet, dass** die Fahrzeug-Soll-Verzögerung (zSoll) durch ein Steuergerät (101) eines Fahrerassistenzsystems, z.B. ein Stabilitätsprogramm (ESP), eine Abstandsregelung (ACC), eine Umkipp-Verhinderung (RSC), ein Notbremssystem (AEBS), eine Antischlupfregelung (ASR) oder eine Gierratensteuerung (YC), und/oder durch den Fahrer durch Betätigung eines Bremsventils (30) vorgegeben wird.

14. Verfahren nach einem der vorhergehenden Ansprüche, **dadurch gekennzeichnet, dass** das Ist-Raddrehverhalten (ds_{Ist}) durch einen Unterschied im Bremsschlupf (BS₁, BS₂, BS₃, BS₄) oder einen Unterschied in einer Winkelgeschwindigkeit (ω) zwischen Rädern (1, 2, 3, 4) unterschiedlicher Fahrzeugachsen (VA, HA1, HA2) des Fahrzeuges (100) charakterisiert ist.

15. Verfahren nach einem der vorhergehenden Ansprüche, **dadurch gekennzeichnet, dass** die Mindest-Ansteuerzeiten (Δt^{min}_{EV}.i, Δt^{min}_{AV}.i) für jedes Drucksteuerventil (11, 12, 13, 14, 15.i, 16.i) individuell vorgegeben werden und die Mindest-Ansteuerzeiten (Δt^{min}_{EV}.i, Δt^{min}_{AV}.i) variabel, insbesondere temperaturabhängig (T), abhängig von einer Art bzw. Bauform des jeweiligen Drucksteuerventils (11, 12, 13, 14, 15.i, 16.i) oder der Fahrzeugachse (VA, HA1, HA2), an der das Drucksteuerventil (11, 12, 13, 14, 15.i, 16.i) angeordnet ist, sind.

16. Verfahren nach einem der vorhergehenden Ansprüche, **dadurch gekennzeichnet, dass** das Soll-Raddrehverhalten (ds_{Soll}) abhängig von der Fahrzeug-Ist-Verzögerung (z_{Ist}) und/oder der Fahrzeug-Soll-Verzögerung (z_{Soll}) ist, beispielsweise derartig, dass das Soll-Raddrehverhalten (ds_{Soll}) bei steigender Fahrzeug-Ist-Verzögerung (z_{Ist}) bzw. Fahrzeug-Soll-Verzögerung (z_{Soll}) derartig in Richtung eines synchronen Drehverhaltens (ds, ω) der Räder (1, 2, 3, 4) der ersten Fahrzeugachse (VA) und der weiteren Fahrzeugachse (HA1, HA2) abfallen.

17. Verfahren nach einem der vorhergehenden Ansprüche, **dadurch gekennzeichnet, dass** die Korrektur-Ansteuerzeit (Δt^{korr}_{EV}.i, Δt^{korr}_{AV}.i) eines Taktzyklus (z.i) in etwa gleichgroße Taktintervalle (z.ij) unterteilt wird, wobei jedes Taktintervall (z.ij) die jeweilige Mindest-Ansteuerzeit (Δt^{min}_{EV}.i, Δt^{min}_{AV}.i) überschreitet und das jeweilige Drucksteuerventil (11, 12, 13, 14, 15.i, 16.i) aufeinanderfolgend mit den Taktintervallen (z.ij) angesteuert wird zum Durchsetzen der Korrektur-Ansteuerzeit (Δt^{korr}_{EV}.i, Δt^{korr}_{AV}.i) mit einer verbesserten Stufbarkeit.

18. Steuereinheit (10), insbesondere zur Durchführung des Verfahrens nach einem der vorhergehenden Ansprüche, wobei die Steuereinheit (10) ausgebildet ist,
das Ansteuerzeiten (Δt_{EV}.i, Δt_{AV}.i) zumindest für all diejenigen Drucksteuerventile (11, 12, 13, 14, 15.i, 16.i) zu berechnen, denen Räder (1, 2, 3, 4) zugeordnet sind, aus deren Drehverhalten (BS₁, BS₂, BS₃, BS₄, ω) das mindestens eine Ist-Raddrehverhalten (ds_{Ist}) folgt, wobei dies einer ersten Anzahl (A1) an Drucksteuerventilen (11, 12, 13, 14, 15.i, 16.i) entspricht, und
bei einem Unterschreiten mindestens einer Mindest-Ansteuerzeit (Δt^{min}_{EV}.i, Δt^{min}_{AV}.i) Korrektur-Ansteuerzeiten (Δt^{korr}_{EV}.i, Δt^{korr}_{AV}.i) für eine zweite Anzahl (A2) an Drucksteuerventilen (11, 12, 13, 14, 15.i, 16.i) zu berechnen, wobei die zweite Anzahl (A2) geringer ist als die erste Anzahl (A1), so dass durch die Korrektur-Ansteuerzeiten (Δt^{korr}_{EV}.i, Δt^{korr}_{AV}.i) die aufgrund des Unterschreitens mindestens einer Mindest-Ansteuerzeit (Δt^{min}_{EV}.i, Δt^{min}_{AV}.i) geringere Anzahl (A1-A2) an angesteuerten Drucksteuerventilen (11, 12, 13, 14, 15.i, 16.i) kompensiert wird.

19. Fahrzeug (100), insbesondere Nutzfahrzeug, mit einem ABS-Bremssystem (200), mit einer Steuereinheit (10) nach Anspruch 18 zur Durchführung des Verfahrens nach einem der Ansprüche 1 bis 17.

## Claims

1. Method for regulating a vehicle-actual-deceleration (z_{Ist}) in a vehicle (100), in particular a utility vehicle, with an ABS brake system (200) with at least the following steps:
- detecting the vehicle-actual-deceleration (z_{Ist});
- determining a target vehicle deceleration (z_{Soll});
- detecting at least one actual wheel rotational behavior (ds_{Ist}), wherein the actual wheel rotational behavior (ds_{Ist}) indicates a difference in the rotational behavior (BS₁, BS₂, BS₃, BS₄, ω) of wheels (1, 2) of a first vehicle axle (VA) from wheels (3, 4) of a further vehicle axle (HA1, HA2);
- calculating actuation times (Δt_{EV}.i, Δt_{AV}.i; i=1,...,4) for the actuation of pressure control valves (11, 12, 13, 14, 15.i, 16.i; 1=1,...,4) of the ABS brake system (200) associated with the wheels (1, 2, 3, 4), wherein the respective actuation times (Δt_{EV}.i, Δt_{AV}.i) indicate the time for which the respective pressure control valve (11, 12, 13, 14, 15.i, 16.i) is to be actuated to adjust the vehicle-actual-deceleration (z_{Ist}) to the target vehicle deceleration (z_{Soll}) and the at least one actual wheel rotational behavior (ds_{Ist}) to a respective target wheel rotational behavior (dssoii) ; and
- determining correction actuation times (Δt^{korr}_{EV}.i, Δt^{korr}_{AV}.i) if at least one of the calculated actuation times (Δt_{EV}.i, Δt_{AV}.i) is less than a minimum actuation time (Δt^{min}_{EV}.i, Δt^{min}_{AV}.i) associated with the respective pressure control valve (11, 12, 13, 14, 15.i, 16.i);
**characterized in that**
the calculation of the actuation times (Δt_{EV}.i, Δt_{AV}.i) is carried out at least for all those pressure control valves (11, 12, 13, 14, 15.i, 16.i) with associated wheels (1, 2, 3, 4) with rotational behavior (BS₁, BS₂, BS₃, BS₄, ω) from which the at least one actual wheel rotational behavior (ds_{Ist}) results, wherein this corresponds to a first number (A1) of pressure control valves (11, 12, 13, 14, 15.i, 16.i), and
in the case of undershooting at least one minimum actuation time (Δt^{min}_{EV}.i, Δt^{min}_{AV}.i), correction actuation times (Δt^{korr}_{EV}.i, Δt^{korr}_{AV}.i) are calculated for a second number (A2) of pressure control valves (11, 12, 13, 14, 15.i, 16.i), wherein the second number (A2) is smaller than the first number (A1), and to bring about the target vehicle deceleration (z_{Soll}) actuation is only carried out of the pressure control valves (11, 12, 13, 14, 15.i, 16.i) with an associated correction actuation time (Δt^{korr}_{EV}. i, Δt^{korr}_{AV.}i),
so that the smaller number (A1-A2) of actuated pressure control valves (11, 12, 13, 14, 15.i, 16.i) resulting from undershooting at least one minimum actuation time (Δt^{min}_{EV}.i, Δt^{min}_{AV}.i) is compensated by the correction actuation times (Δt^{korr}_{EV}.i, Δt^{korr}_{AV}.i).

2. Method according to Claim 1, **characterized in that** the second number (A2) of pressure control valves (11, 12, 13, 14, 15.i, 16.i) is a real subset of the first number (A1) of pressure control valves (11, 12, 13, 14, 15.i, 16.i).

3. Method according to Claim 1 or 2, **characterized in that** the target vehicle deceleration (z_{Soll}) is determined from a ramp-shaped profile (V) against time (t), wherein the ramp-shaped profile (V) is divided into multiple timing cycles (z.i) and a target vehicle deceleration (z_{Soll}) lying on the ramp (V) is associated with each timing cycle (z.i) and forms the basis for the calculation of the actuation times (Δt_{EV}.i, Δt_{AV}.i) at the respective point in time (t),
wherein there is a waiting time (t_{w}) between each timing cycle (z.i).

4. Method according to any one of the preceding claims, **characterized in that** in the case in which the actuation times (Δt_{EV}.i, Δt_{AV}.i) of all pressure control valves (11, 12, 13, 14, 15.i, 16.i) with associated wheels (1, 2, 3, 4) with rotational behavior (BS₁, BS₂, BS₃, BS₄, ω) from which the at least one actual wheel rotational behavior (ds_{Ist}) is determined are less than the minimum actuation time (Δt^{min}_{EV}.i, Δt^{min}_{AV}.i), a correction actuation time (Δt^{korr}_{EV}.i, Δt^{korr}_{AV}.i) is calculated at least for or only for the pressure control valve (11, 12, 13, 14, 15.i, 16.i) with a calculated actuation time (Δt_{EV}.i, Δt_{AV}.i) that is closest to the respective minimum actuation time (Δt^{min}_{EV}.i, Δt^{min}_{AV}.i).

5. Method according to any one of Claims 1 to 3, **characterized in that** in the case in which the actuation times (Δt_{EV}.i, Δt_{AV}.i) of all pressure control valves (11, 12, 13, 14, 15.i, 16.i) with associated wheels (1, 2, 3, 4) with rotational behavior (BS₁, BS₂, BS₃, BS₄, ω) from which the at least one actual wheel rotational behavior (ds_{Ist}) is determined are less than the minimum actuation time (Δt^{min}_{EV}.i, Δt^{min}_{AV}.i), a correction actuation time (Δt^{korr}_{EV}.i, Δt^{korr}_{AV}.i) is not calculated for the pressure control valve (11, 12, 13, 14, 15.i, 16.i) for which the actuation time (Δt_{EV}.i, Δt_{AV}.i) differs the most from the minimum actuation time (Δt^{min}_{EV}.i, Δt^{min}_{AV}.i) associated with this pressure control valve (11, 12, 13, 14, 15.i, 16.i) and a new calculation of correction actuation times (Δt^{korr}_{EV}.i, Δt^{korr}_{AV}.i) is carried out for all other pressure control valves (11, 12, 13, 14, 15.i, 16.i),
wherein in the case in which at least one of the newly calculated correction actuation times (Δt^{korr}_{EV}.i, Δt^{korr}_{AV}.i) is also less than the respective minimum actuation time (Δt^{min}_{EV}.i, Δt^{min}_{AV}.i), a recalculation is carried out successively without the respective correction actuation time (Δt^{korr}_{EV}.i, Δt^{korr}_{AV}.i) that differs the most from the minimum actuation time (Δt^{min}_{EV}.i, Δt^{min}_{AV}.i).

6. Method according to any one of the preceding claims, **characterized in that** in the case in which the correction actuation time (Δt^{korr}_{EV}.i, Δt^{korr}_{AV}.i) is also less than the minimum actuation time (Δt^{min}_{EV}.i, Δt^{min}_{AV}.i), that correction actuation time (Δt^{korr}_{EV}.i, Δt^{korr}_{AV}.i) is set to the respective minimum actuation time (Δt^{min}_{EV}.i, Δt^{min}_{AV}.i).

7. Method according to any one of Claims 1 to 5, **characterized in that** in the case in which the correction actuation time (Δt^{korr}_{EV}.i, Δt^{korr}_{AV}.i) for the last pressure control valve (11, 12, 13, 14, 15.i, 16.i) that is available for regulation is also less than the respective minimum actuation time (Δt^{min}_{EV}.i, Δt^{min}_{AV}.i), actuation of the pressure control valves (11, 21, 13, 14) is only then carried out if a correction actuation time (Δt^{korr}_{EV}.i, Δt^{korr}_{AV}.i) for the last pressure control valve (11, 12, 13, 14, 15.i, 16.i) that is available for regulation has been determined that is greater than or equal to the respective minimum actuation time (Δt^{min}_{EV}.i, Δt^{min}_{AV}.i) because of a variable waiting time (Δt_{w}) between two timing cycles (z.i), wherein the variable waiting time (Δt_{w}) is divided into a minimum waiting time (t^{min}_{w}) and at least one time interval (t_{Int}).

8. Method according to any one of Claims 1 to 3, **characterized in that** in the case in which the actuation times (Δt_{EV}.i, Δt_{AV}.i) of at least one pressure control valve (11, 12, 13, 14, 15.i, 16.i) with associated wheels (1, 2, 3, 4) with rotational behavior (BS₁, BS₂, BS₃, BS₄, ω) from which the at least one actual wheel rotational behavior (ds_{Ist}) is determined exceeds the minimum actuation time (Δt^{min}_{EV}.i, Δt^{min}_{AV}.i), at least one or only one correction actuation time (Δt^{korr}_{EV}.i, Δt^{korr}_{AV}.i) is calculated for these pressure control valves (11, 12, 13, 14, 15.i, 16.i) that exceed the minimum actuation time (Δt^{min}_{EV}.i, Δt^{min}_{AV}.i).

9. Method according to any one of the preceding claims, **characterized in that** axle-wise actuation of the pressure control valves (11, 12, 13, 14, 15.i, 16.i) is carried out in such a way that a summation actuation time (t^{VA}_{Sum}, Δt^{HA1}_{Sum}, Δt^{HA2}_{Sum}) is calculated from all actuation times (Δt_{EV}.i, Δt_{AV}.i) of the respective vehicle axle (VA, HA1, HA2) and a correction actuation time (Δt^{korr}_{EV}.i, Δt^{korr}_{AV}.i) is calculated only for those pressure control valves (11, 12, 13, 14) associated with the vehicle axle (VA, HA1, HA2) with the greatest summation actuation time (t^{VA}_{Sum}, Δt^{HA1}_{Sum}, Δt^{HA2}_{Sum}) .

10. Method according to any one of Claims 1 to 3, **characterized in that** in the case in which the actuation times (Δt_{EV}.i, Δt_{AV}.i) of all pressure control valves (11, 12, 13, 14, 15.i, 16.i) with associated wheels (1, 2, 3, 4) with rotational behavior (BS₁, BS₂, BS₃, BS₄, ω) from which the at least one actual wheel rotational behavior (ds_{Ist}) is determined exceed the minimum actuation time (Δt^{min}_{EV}.i, Δt^{min}_{AV}.i), no correction actuation times (Δt^{korr}_{EV}.i, Δt^{korr}_{AV}.i) are calculated and actuation of the pressure control valves (11, 12, 13, 14, 15.i, 16.i) is carried out with the respective originally calculated actuation times (Δt_{EV}.i, Δt_{AV}.i).

11. Method according to any one of the preceding claims, **characterized in that** the actuation times (Δt_{EV}.i, Δt_{AV}.i) are calculated for pressure control valves on all wheels (1, 2, 3, 4) of the vehicle (100) that can be braked.

12. Method according to any one of the preceding claims, **characterized in that** for calculating the actuation times (Δt_{EV}.i, Δt_{AV}.i) and the correction actuation times (Δt^{korr}_{EV}.i, Δt^{korr}_{AV}.i) for a respective pressure control valve (11, 12, 13, 14), in each case an inlet valve actuation time (Δt_{EV}.i) or a correction inlet valve actuation time (Δt^{korr}_{EV}.i) for an inlet valve (15.i) of the respective pressure control valve (11, 12, 13, 14) and an outlet valve actuation time (Δt_{AV}.i) or a correction outlet valve actuation time (Δt^{korr}_{AV}.i) for an outlet valve (15.i) of the respective pressure control valve (11, 12, 13, 14) is considered, wherein in each case an inlet valve minimum actuation time (Δt^{min}_{EV}) or an outlet valve minimum actuation time (Δt^{min}_{AV}.i) is associated with each inlet valve (15.i) and each outlet valve (16.i).

13. Method according to any one of the preceding claims, **characterized in that** the target vehicle deceleration (zSoll) is specified by a control unit (101) of a driver assistance system, for example a stability program (ESP), an automatic cruise control system (ACC), a rollover prevention system (RSC), an emergency braking system (AEBS), an antislip regulation system (ASR) or a yaw rate controller (YC), and/or by the driver by actuating a brake valve (30).

14. Method according to any one of the preceding claims, **characterized in that** the actual wheel rotational behavior (ds_{Ist}) is **characterized by** a difference in the brake slip (BS₁, BS₂, BS₃, BS₄) or a difference in an angular speed (ω) between wheels (1, 2, 3, 4) of different vehicle axles (VA, HA1, HA2) of the vehicle (100) .

15. Method according to any one of the preceding claims, **characterized in that** the minimum actuation times (Δt^{min}_{EV}.i, Δt^{min}_{AV}.i) for each pressure control valve (11, 12, 13, 14, 15.i, 16.i) are specified individually and the minimum actuation times (Δt^{min}_{EV}.i, Δt^{min}_{AV}.i) are variable, in particular temperature dependent (T), dependent on the type or design of the respective pressure control valve (11, 12, 13, 14, 15.i, 16.i) or the vehicle axle (VA, HA1, HA2) on which the pressure control valve (11, 12, 13, 14, 15.i, 16.i) is disposed.

16. Method according to any one of the preceding claims, **characterized in that** the target wheel rotational behavior (ds_{Soll}) is dependent on the vehicle-actual-deceleration (z_{Ist}) and/or the target vehicle deceleration (z_{Soll}), for example such that the target wheel rotational behavior (ds_{Soll}) decreases towards synchronous rotational behavior (ds, ω) of the wheels (1, 2, 3, 4) of the first vehicle axle (VA) and of the further vehicle axle (HA1, HA2) with increasing vehicle-actual-deceleration (z_{Ist}) or target vehicle deceleration (z_{Soll}).

17. Method according to any one of the preceding claims, **characterized in that** the correction actuation time (Δt^{korr}_{EV}.i, Δt^{korr}_{AV}.i) of a timing cycle (z.i) is divided into approximately equal timing intervals (z.ij), wherein each timing interval (z.ij) exceeds the respective minimum actuation time (Δt^{min}_{EV}.i, Δt^{min}_{AV}.i) and the respective pressure control valve (11, 12, 13, 14, 15.i, 16.i) is successively actuated with the timing intervals (z.ij) to implement the correction actuation time (Δt^{korr}_{EV}.i, Δt^{korr}_{AV}.i) with improved control sensitivity.

18. Control unit (10) for carrying out the method according to any one of the preceding claims, wherein the control unit (10) is embodied,
to calculate the actuation times (Δt_{EV}.i, Δt_{AV}.i) at least for all those pressure control valves (11, 12, 13, 14, 15.i, 16.i) with associated wheels (1, 2, 3, 4) with rotational behavior (BS₁, BS₂, BS₃, BS₄, ω) from which the at least one actual wheel rotational behavior (ds_{Ist}) results, wherein this corresponds to a first number (A1) of pressure control valves (11, 12, 13, 14, 15.i, 16.i), and
in the case of undershooting at least one minimum actuation time (Δt^{min}_{EV}.i, Δt^{min}_{AV}.i), to calculate correction actuation times (Δt^{korr}_{EV}.i, Δt^{korr}_{AV}.i) for a second number (A2) of pressure control valves (11, 12, 13, 14, 15.i, 16.i), wherein the second number (A2) is smaller than the first number (A1), so that the smaller number (A1-A2) of actuated pressure control valves (11, 12, 13, 14, 15.i, 16.i) resulting from undershooting at least one minimum actuation time (Δt^{min}_{EV}.i, Δt^{min}_{AV}.i) is compensated by the correction actuation times (Δt^{korr}_{EV}.i, Δt^{korr}_{AV}.i).

19. Vehicle (100), in particular a utility vehicle, with an ABS brake system (200), with a control unit (10) according to Claim 18 for carrying out the method according to any one of Claims 1 to 17.

## Revendications

1. Procédé permettant de réguler une décélération réelle de véhicule (z_{Ist}) dans un véhicule (100), en particulier un véhicule utilitaire, doté d'un système de freinage ABS (200), comprenant au moins les étapes suivantes consistant à :
- détecter la décélération réelle de véhicule (z_{Ist}) ;
- déterminer une décélération de consigne de véhicule (z_{Soll}) ;
- détecter au moins un comportement de rotation de roue réel (ds_{Ist}), le comportement de rotation de roue réel (ds_{Ist}) indiquant une différence du comportement de rotation (BS₁, BS₂, BS₃, BS₄, ω) des roues (1, 2) d'un premier essieu de véhicule (VA) par rapport aux roues (3, 4) d'un autre essieu de véhicule (HA1, HA2) ;
- calculer des temps de pilotage (Δt_{EV}.i, Δt_{AV}.i ; i = 1, ...,4) pour piloter des soupapes de commande de pression (11, 12, 13, 14, 15.i, 16.i ; i = 1, ..., 4), associées aux roues (1, 2, 3, 4), du système de freinage ABS (200),
les temps de pilotage (Δt_{EV}.i, Δt_{AV}.i) respectifs indiquant pendant combien de temps la soupape de commande de pression (11, 12, 13, 14, 15.i, 16.i) doit être pilotée pour adapter la décélération réelle de véhicule (z_{Ist}) à la décélération de consigne de véhicule (z_{Soll})et pour adapter ledit au moins un comportement de rotation de roue réel (ds_{Ist}) à un comportement de rotation de roue de consigne (ds_{Soll}) respectif ; et
- déterminer des temps de pilotage de correction (Δt^{korr}_{EV}.i, Δt^{korr}_{AV}.i) si au moins l'un des temps de pilotage (Δt_{EV}.i, Δt_{AV}.i) calculés soupasse un temps de pilotage minimum (Δt^{min}_{EV}.i, Δt^{min}_{AV}.i) associé à la soupape de commande de pression (11, 12, 13, 14, 15.i, 16.i) respective ;
**caractérisé en ce que**
le calcul des temps de pilotage (Δt_{EV}.i, Δt_{AV}.i) est effectué au moins pour les soupapes de commande de pression (11, 12, 13, 14, 15.i, 16.i) auxquelles sont associées des roues (1, 2, 3, 4) à partir du comportement de rotation (BS₁, BS₂, BS₃, BS₄, ω) desquelles découle ledit au moins un comportement de rotation de roue réel (ds_{Ist}), ce qui correspond à un premier nombre (A1) de soupapes de commande de pression (11, 12, 13, 14, 15.i, 16.i), et
en cas de soupassement d'au moins un temps de pilotage minimum (Δt^{min}_{EV}.i, Δt^{min}_{AV}.i), des temps de pilotage de correction (Δt^{korr}_{EV}.i, Δt^{korr}_{AV}.i) sont calculés pour un deuxième nombre (A2) de soupapes de commande de pression (11, 12, 13, 14, 15.i, 16.i), le deuxième nombre (A2) étant inférieur au premier nombre (Al), et afin de provoquer la décélération de consigne de véhicule (z_{Soll}), un pilotage seules des soupapes de commande de pression (11, 12, 13, 14, 15.i, 16.i) auxquelles est associé un temps de pilotage de correction (Δt^{korr}_{EV}.i, Δt^{korr}_{AV}.i) est effectué,
de sorte que les temps de pilotage de correction (Δt^{korr}_{EV}.i, Δt^{korr}_{AV}.i) compensent le nombre inférieur (A1 à A2) de soupapes de commande de pression pilotées (11, 12, 13, 14, 15.i, 16.i), dû au soupassement d'au moins un temps de pilotage minimum (Δt^{min}_{EV}.i, Δt^{min}_{AV}.i).

2. Procédé selon la revendication 1, **caractérisé en ce que** le deuxième nombre (A2) de soupapes de commande de pression (11, 12, 13, 14, 15.i, 16.i) est une partie propre du premier nombre (A1) de soupapes de commande de pression (11, 12, 13, 14, 15.i, 16.i).

3. Procédé selon la revendication 1 ou 2, **caractérisé en ce que** la décélération de consigne de véhicule (z_{Soll}) est déterminée à partir d'une courbe en forme de rampe (V) par rapport au temps (t),
dans lequel la courbe en forme de rampe (V) est divisée en plusieurs cycles d'horloge (z.i), et à chaque cycle d'horloge (z.i) est associée une décélération de consigne de véhicule (z_{Soll})située sur la rampe (V) et qui est utilisée comme base du calcul des temps de pilotage (Δt_{EV}.i, Δt_{AV}.i) à l'instant respectif (t),
un temps d'attente (t_{w}) étant respecté entre chaque cycle d'horloge (z.i).

4. Procédé selon l'une quelconque des revendications précédentes, **caractérisé en ce que** lorsque les temps de pilotage (Δt_{EV}.i, Δt_{AV}.i) de toutes les soupapes de commande de pression (11, 12, 13, 14, 15.i, 16.i) auxquelles sont associées des roues (1, 2, 3, 4) à partir du comportement de rotation (BS₁, BS₂, BS₃, BS₄, ω) desquelles est déterminé ledit au moins un comportement de rotation de roue réel (ds_{Ist}) soupassent le temps de pilotage minimum (Δt^{min}_{EV}.i, Δt^{min}_{AV}.i), un temps de pilotage de correction (Δt^{korr}_{EV}.i, Δt^{korr}_{AV}.i) est calculé au moins ou uniquement pour la soupape de commande de pression (11, 12, 13, 14, 15.i, 16.i) dont le temps de pilotage calculé (Δt_{EV}.i, Δt_{AV}.i) est le plus proche du temps de pilotage minimum (Δt^{min}_{EV}.i, Δt^{min}_{AV}.i) respectif.

5. Procédé selon l'une quelconque des revendications 1 à 3, **caractérisé en ce que** lorsque les temps de pilotage (Δt_{EV}.i, Δt_{AV}.i) de toutes les soupapes de commande de pression (11, 12, 13, 14, 15.i, 16.i) auxquelles sont associées des roues (1, 2, 3, 4) à partir du comportement de rotation (BS₁, BS₂, BS₃, BS₄, ω) desquelles est déterminé ledit au moins un comportement de rotation de roue réel (ds_{Ist}) soupassent le temps de pilotage minimum (Δt^{min}_{EV}.i, Δt^{min}_{AV}.i), aucun temps de pilotage de correction (Δt^{korr}_{EV}.i, Δt^{korr}_{AV}.i) n'est calculé pour la soupape de commande de pression (11, 12, 13, 14, 15.i, 16.i) pour laquelle le temps de pilotage (Δt_{EV}.i, Δt_{AV}.i) dévie le plus du temps de pilotage minimum (Δt^{min}_{EV}.i, Δt^{min}_{AV}.i) associé à cette soupape de commande de pression (11, 12, 13, 14, 15.i, 16.i), et pour toutes les autres soupapes de commande de pression (11, 12, 13, 14, 15.i, 16.i), un nouveau calcul du temps de pilotage de correction (Δt^{korr}_{EV}.i, Δt^{korr}_{AV}.i) est effectué, dans lequel, lorsqu'au moins l'un des temps de pilotage de correction (Δt^{korr}_{EV}.i, Δt^{korr}_{AV}.i) recalculés soupasse le temps de pilotage minimum (Δt^{min}_{EV}.i, Δt^{min}_{AV}.i) respectif, successivement un recalcul est effectué sans le temps de pilotage de correction (Δt^{korr}_{EV}.i, Δt^{korr}_{AV}.i) respectif déviant le plus du temps de pilotage minimum (Δt^{min}_{EV}.i, Δt^{min}_{AV}.i).

6. Procédé selon l'une quelconque des revendications précédentes, **caractérisé en ce que** lorsque le temps de pilotage de correction (Δt^{korr}_{EV}.i, Δt^{korr}_{AV}.i) soupasse également le temps de pilotage minimum (Δt^{min}_{EV}.i, Δt^{min}_{AV}.i), ce temps de pilotage de correction (Δt^{korr}_{EV}.i, Δt^{korr}_{AV}.i) est réglé sur le temps de pilotage minimum (Δt^{min}_{EV}.i, Δt^{min}_{AV}.i) respectif.

7. Procédé selon l'une quelconque des revendications 1 à 5, **caractérisé en ce que** lorsque le temps de pilotage de correction (Δt^{korr}_{EV}.i, Δt^{korr}_{AV}.i) pour la dernière soupape de commande de pression (11, 12, 13, 14, 15.i, 16.i) disponible pour une régulation soupasse également le temps de pilotage minimum (Δt^{min}_{EV}.i, Δt^{min}_{AV}.i) respectif, un pilotage des soupapes de commande de pression (11, 21, 13, 14) n'est effectué que si un temps de pilotage de correction (Δt^{korr}_{EV}.i, Δt^{korr}_{AV}.i) a été déterminé pour la dernière soupape de commande de pression (11, 12, 13, 14, 15.i, 16.i) disponible pour une régulation qui est supérieur ou égal au temps de pilotage minimum (Δt^{min}_{EV}.i, Δt^{min}_{AV}.i) respectif, en raison d'un temps d'attente variable (Δt_{w}) entre deux de cycles d'horloge (z.i),
le temps d'attente variable (Δt_{w}) étant divisé en un temps d'attente minimum (t^{min}_{w}) et au moins un intervalle de temps (tint) .

8. Procédé selon l'une quelconque des revendications 1 à 3, **caractérisé en ce que** lorsque les temps de pilotage (Δt_{EV}.i, Δt_{AV}.i) d'au moins une soupape de commande de pression (11, 12, 13, 14, 15.i, 16.i) à laquelle sont associées des roues (1, 2, 3, 4) à partir du comportement de rotation (BS₁, BS₂, BS₃, BS₄, ω) desquelles ledit au moins un comportement de rotation de roue réel (ds_{Ist}) est déterminé, dépassent le temps de pilotage minimum (Δt^{min}_{EV}.i, Δt^{min}_{AV}.i), au moins ou uniquement un temps de pilotage de correction (Δt^{korr}_{EV}.i, Δt^{korr}_{AV}.i) est calculé pour ces soupapes de commande de pression (11, 12, 13, 14, 15.i, 16.i) dépassant le temps de pilotage minimum (Δt^{min}_{EV}.i, Δt^{min}_{AV}.i).

9. Procédé selon l'une quelconque des revendications précédentes, **caractérisé en ce qu'**un pilotage par essieu des soupapes de commande de pression (11, 12, 13, 14, 15.i, 16.i) est effectué de telle sorte qu'un temps de pilotage cumulé (t^{VA}_{Sum}, Δt^{HA1}_{Sum}, Δt^{HA2}_{Sum}) est calculé à partir de tous les temps de pilotage (Δt_{EV}.i, Δt_{AV}.i) de l'essieu de véhicule (VA, HA1, HA2) respectif, et un temps de pilotage de correction (Δt^{korr}_{EV}.i, Δt^{korr}_{AV}.i) n'est calculé que pour les soupapes de commande de pression (11, 12, 13, 14) qui sont associées à l'essieu de véhicule (VA, HA1, HA2) ayant le temps de pilotage cumulé (t^{VA}_{Sum}, Δt^{HA1}_{Sum}, Δt^{HA2}_{Sum}) le plus élevé.

10. Procédé selon l'une quelconque des revendications 1 à 3, **caractérisé en ce que** lorsque les temps de pilotage (Δt_{EV}.i, Δt_{AV}.i) de toutes les soupapes de commande de pression (11, 12, 13, 14, 15.i, 16.i), auxquelles sont associées des roues (1, 2, 3, 4) à partir du comportement de rotation (BS₁, BS₂, BS₃, BS₄, ω) desquelles ledit au moins un comportement de rotation de roue réel (ds_{Ist}) est déterminé, dépassent le temps de pilotage minimum (Δt^{min}_{EV}.i, Δt^{min}_{AV}.i), aucun temps de pilotage de correction (Δt^{korr}_{EV}.i, Δt^{korr}_{AV}.i) n'est calculé, et un pilotage des soupapes de commande de pression (11, 12, 13, 14, 15.i, 16.i) est effectué avec les temps de pilotage (Δt_{EV}.i, Δt_{AV}.i) respectifs calculés initialement.

11. Procédé selon l'une quelconque des revendications précédentes, **caractérisé en ce que** les temps de pilotage (Δt_{EV}.i, Δt_{AV}.i) sont calculés pour des soupapes de commande de pression sur toutes les roues (1, 2, 3, 4) pouvant être freinées du véhicule (100).

12. Procédé selon l'une quelconque des revendications précédentes, **caractérisé en ce que** pour calculer les temps de pilotage (Δt_{EV}.i, Δt_{AV}.i) ainsi que les temps de pilotage de correction (Δt^{korr}_{EV}.i, Δt^{korr}_{AV}.i) pour une soupape de commande de pression (11, 12, 13, 14) respective, respectivement un temps de pilotage de soupape d'entrée (Δt_{EV}.i) ou un temps de pilotage de soupape d'entrée de correction (Δt^{korr}_{EV}.i) est pris en considération pour une soupape d'entrée (15.i) de la soupape de commande de pression (11, 12, 13, 14) respective, et un temps de pilotage de soupape de sortie (Δt_{AV}.i) ou un temps de pilotage de soupape de sortie de correction (Δt^{korr}_{AV}.i) est pris en considération pour une soupape de sortie (15.i) de la soupape de commande de pression (11, 12, 13, 14) respective, dans lequel à chaque soupape d'entrée (15.i) et à chaque soupape de sortie (16.i), respectivement un temps de pilotage de soupape d'entrée minimum (Δt^{min}_{EV}) ou un temps de pilotage de soupape de sortie minimum (Δt^{min}_{AV}.i) est associé.

13. Procédé selon l'une quelconque des revendications précédentes, **caractérisé en ce que** la décélération de consigne de véhicule (zSoll) est prédéfinie par un appareil de commande (101) d'un système d'assistance au conducteur, par exemple un programme de stabilité (ESP), une régulation de distance (ACC), un dispositif anti-renversement (RSC), un système de freinage d'urgence (AEBS), un système anti-patinage (ASR) ou une commande de taux de lacet (YC), et/ou par le conducteur par l'actionnement d'une soupape de freinage (30).

14. Procédé selon l'une quelconque des revendications précédentes, **caractérisé en ce que** le comportement de rotation de roue réel (ds_{Ist}) est **caractérisé par** une différence de glissement de freinage (BS₁, BS₂, BS₃, BS₄) ou une différence d'une vitesse angulaire (ω) entre les roues (1, 2, 3, 4) de différents essieux de véhicule (VA, HA1, HA2) du véhicule (100).

15. Procédé selon l'une quelconque des revendications précédentes, **caractérisé en ce que** les temps de pilotage minimum (Δt^{min}_{EV}.i, Δt^{min}_{AV}.i) pour chaque soupape de commande de pression (11, 12, 13, 14, 15.i, 16.i) sont prédéfinis individuellement, et les temps de pilotage minimum (Δt^{min}_{EV}.i, Δt^{min}_{AV}.i) sont variables, en particulier en fonction de la température (T), en fonction d'un type ou d'un modèle de la soupape de commande de pression (11, 12, 13, 14, 15.i, 16.i) respective ou de l'essieu de véhicule (VA, HAI, HA2) sur lequel est disposée la soupape de commande de pression (11, 12, 13, 14, 15.i, 16.i).

16. Procédé selon l'une quelconque des revendications précédentes, **caractérisé en ce que** le comportement de rotation de roue de consigne (ds_{Soll}) dépend de la décélération réelle de véhicule (z_{Ist}) et/ou de la décélération de consigne de véhicule (z_{Soll}), par exemple de telle sorte que lorsque la décélération réelle de véhicule (z_{Ist}) ou la décélération de consigne de véhicule (z_{Soll})augmente, le comportement de rotation de roue de consigne (ds_{Soll}) diminue de même en direction d'un comportement de rotation synchrone (ds, ω) des roues (1, 2, 3, 4) du premier essieu de roue (VA) et de l'autre essieu de véhicule (HA1, HA2).

17. Procédé selon l'une quelconque des revendications précédentes, **caractérisé en ce que** le temps de pilotage de correction (Δt^{korr}_{EV}.i, Δt^{korr}_{AV}.i) d'un cycle d'horloge (z.i) est divisé en intervalles d'horloge (z.ij) approximativement de même taille, chaque intervalle d'horloge (z.ij) dépassant le temps de pilotage minimum (Δt^{min}_{EV}.i, Δt^{min}_{AV}.i) respectif, et la soupape de commande de pression (11, 12, 13, 14, 15.i, 16.i) respective étant pilotée successivement avec les intervalles d'horloge (z.ij) pour imposer le temps de pilotage de correction (Δt^{korr}_{EV}.i, Δt^{korr}_{AV}.i) avec une la meilleure possibilité de graduation.

18. Unité de commande (10) permettant d'exécuter le procédé selon l'une quelconque des revendications précédentes, l'unité de commande (10) étant réalisée pour
calculer les temps de pilotage (Δt_{EV}.i, Δt_{AV}.i) au moins pour toutes les soupapes de commande de pression (11, 12, 13, 14, 15.i, 16.i) auxquelles sont associées des roues (1, 2, 3, 4) à partir du comportement de rotation (BS₁, BS₂, BS₃, BS₄, ω) desquelles découle ledit au moins un comportement de rotation de roue réel (ds_{Ist}), ce qui correspond à un premier nombre (A1) de soupapes de commande de pression (11, 12, 13, 14, 15.i, 16.i), et
en cas de soupassement d'au moins un temps de pilotage minimum (Δt^{min}_{EV}.i, Δt^{min}_{AV}.i), calculer des temps de pilotage de correction (Δt^{korr}_{EV}.i, Δt^{korr}_{AV}.i) pour un deuxième nombre (A2) de soupapes de commande de pression (11, 12, 13, 14, 15.i, 16.i), le deuxième nombre (A2) étant inférieur au premier nombre (A1) de sorte que les temps de pilotage de correction (Δt^{korr}_{EV}.i, Δt^{korr}_{AV}.i) compensent le nombre inférieur (A1 à A2) de soupapes de commande de pression pilotées (11, 12, 13, 14, 15.i, 16.i), dû au soupassement d'au moins un temps de pilotage minimum (Δt^{min}_{EV}.i, Δt^{min}_{AV}.i).

19. Véhicule (100), en particulier véhicule utilitaire, comprenant un système de freinage ABS (200), doté d'une unité de commande (10) selon la revendication 18 pour exécuter le procédé selon l'une quelconque des revendications 1 à 17.
